# EUROPEAN PATENT SPECIFICATION

(11) **EP 2 843 739 B1**
(45) Date of publication and mention of the grant of the patent: **06.05.2020**
(21) Application number: 13782425.6
(22) Date of filing: 23.04.2013
(51) Int. Cl.: H01M 4/62, H01M 4/134, H01M 4/38, H01M 10/0525, H01M 10/0566, H01M 4/1395, H01M 10/052, H01M 4/02

(54) **LITHIUM ION SECONDARY BATTERY**
LITHIUM-IONEN-SEKUNDÄRBATTERIE
BATTERIE RECHARGEABLE AU LITHIUM-ION

(30) Priority: 23.04.2012 JP 2012097362
(43) Date of publication of application: 04.03.2015
(73) Proprietor: Zeon Corporation, Tokyo 100-8246 (JP)
(72) Inventor: SASAKI, Tomokazu, Tokyo 100-8246 (JP)
(74) Representative: Maiwald Patent- und Rechtsanwaltsgesellschaft mbH
(86) International application number: PCT/JP2013/061846
(87) International publication number: WO 2013/161786

(56) References cited:
- EP-A1- 2 752 927
- WO-A1-2011/122297
- WO-A1-2012/002451
- WO-A1-2012/026462
- WO-A1-2012/026462
- JP-A- 2006 048 932
- JP-A- 2010 146 871
- US-A1- 2011 176 255

## Description

### {Technical Field}

The present invention relates to a lithium ion secondary battery which has a high capacity and in which swelling of the cell after charging and discharging is suppressed.

### {Background Art}

A further increase in demand for an electrochemical device such as a lithium ion secondary battery which is compact and lightweight, has high energy density, and is capable of repeatedly charging and discharging is expected even in view of environmental concerns. The lithium ion secondary battery has high energy density and thus is used in the fields of mobile phones, laptop personal computers, and the like. In addition, with an increase or development in use application, the need for further improvement in performance, such as a reduced resistivity or an increased capacity, in the electrochemical device has increased.

For example, in Patent Literature 1, cycle characteristics are improved by using a styrene-butadiene rubber (SBR) binder having a breaking extension of a predetermined value or more. Further, in Patent Literature 2, cycle characteristics are improved by using a polyamide-imide binder having a tensile strength, tensile extension, and tensile elastic modulus of a predetermined value or more. Further, in Patent Literature 3, there is described a binder composition for a negative electrode of a secondary battery, including a particulate binder, and a water-soluble polymer containing an acidic functional group, wherein the water-soluble polymer has an ion conductivity of 1 × 10⁻⁵ to 1 × 10⁻³ S/cm; and a swelling degree of the water-soluble polymer to a liquid with a solubility parameter of 8 to 13 (cal/cm³)^{1/2} is 1.0 to 2.0 times a swelling degree of the particulate binder measured under the same conditions. Patent Literature 4 describes lithium ion secondary batteries having various binder compositions but Patent Literature 4 is silent about swelling characteristics of the battery.

### {Citation List}

### {Patent Literature}

Patent Literature 1: JP 11-111300 A
Patent Literature 2: JP 2011-48969 A
Patent Literature 3: EP 2752927 A1
Patent Literature 4: US 2011/176255 A1

### {Summary of Invention}

Incidentally, in order to further increase the capacity of the lithium ion secondary battery, silicon-based materials such as Si and silicon oxide (SiOₓ) may be used for a negative electrode active material. However, in a case where a silicon-based active material is used for the negative electrode active material, there is a problem in that, when a negative electrode is prepared using a binder of Patent Literature 1 or 2 and then is used for a lithium ion secondary battery, swelling of the cell increases.

Moreover, the lithium ion secondary battery is demanded to have favorable performance even in a high temperature environment and a low temperature environment.

A purpose of the present invention is intended to provide a lithium ion secondary battery in which swelling of the cell can be suppressed and which has favorable performance in a high temperature environment and a low temperature environment.

### {Solution to Problem}

An inventor of the present invention, as defined in claim 1, has conducted extensive studies and, as a result, the inventor found out that, when a binder having a predetermined swelling degree and repeating tensile strength is used, it is possible to obtain a lithium ion secondary battery in which the swelling of the cell can be suppressed even in a case where a silicon-based material is used for the negative electrode active material, and which has favorable performance even in a high temperature environment and a low temperature environment. Therefore, the present invention has been completed.

That is, the present invention provides:
(1) a lithium ion secondary battery including a positive electrode, a negative electrode, an electrolytic solution, and a separator, wherein the negative electrode includes a negative electrode active material layer formed from a slurry composition for the negative electrode which includes a binder composition for the negative electrode including a particulate polymer A containing an aliphatic conjugated diene monomer unit, and a negative electrode active material, the swelling degree of the binder composition for the negative electrode is 1 to 2 times when a film of the binder composition for the negative electrode is immersed in a liquid which is a 1. 0 mol/L LiPF₆ solution in a mixture of ethylene carbonate and diethyl carbonate at a volume ratio of 1/2 as a solvent at 60°C for 72 hours; the repeating tensile strength of the binder composition for the negative electrode swollen by said liquid is 0.49 x 10⁵ N/m² to 19.61 x 10⁵ N/m² (0.5 to 20 Kg/cm²) at a low extension modulus of 15%, the positive electrode includes a positive electrode active material layer formed from a slurry composition for the positive electrode which includes a binder composition for the positive electrode including a particulate polymer B containing 20 to 50 wt% of an ethylenically unsaturated carboxylic acid monomer unit with respect to the total monomer units, and a positive electrode active material, the swelling degree of the binder composition for the positive electrode is 1 to 5 times when a film of the binder composition for the positive electrode is immersed in a liquid which is a 1.0 mol/L LiPF₆ solution in a mixture of ethylene carbonate and diethyl carbonate at a volume ratio of 1/2 as a solvent at 60°C for 72 hours; and the repeating tensile strength of the binder composition for the positive electrode swollen by said liquid is 1.96 x 10⁴ N/m² to 4.90 x 10⁵ N/m² (0.2 to 5 Kg/cm²) at a low extension modulus of 15%, wherein the repeating tensile strength (low extension modulus of 15%) is obtained by stretching a swollen binder film at a speed of 50 mm/min and measuring a strength corresponding to 15% extension at 1,000 times of stretching according to JIS-K7312;
(2) the lithium ion secondary battery according to (1), wherein the negative electrode active material includes a Si compound that occludes and releases lithium;
(3) the lithium ion secondary battery according to (1) or (2), wherein the particulate polymer A includes an aromatic vinyl monomer unit, and a containing ratio of the aromatic vinyl monomer unit in the particulate polymer A is 50 to 75% by weight;
(4) the lithium ion secondary battery according to any of (1) to (3), wherein the particulate polymer A includes an ethylenically unsaturated carboxylic acid monomer unit, and a containing ratio of the ethylenically unsaturated carboxylic acid monomer unit in the particulate polymer A is 0.5 to 10% by weight;
(5) the lithium ion secondary battery according to any of (1) to (4), wherein a tetrahydrofuran-insoluble content of the particulate polymer A is 75 to 95%;
(6) the lithium ion secondary battery according to any of (1) to (5), wherein the binder composition for a negative electrode further includes a water-soluble polymer having an ethylenically unsaturated carboxylic acid monomer unit, and a containing ratio of the ethylenically unsaturated carboxylic acid monomer unit in the water-soluble polymer is 20 to 60% by weight;
(7) the lithium ion secondary battery according to any of (1) to (6), wherein the particulate polymer B includes a (meth) acrylic acid ester monomer unit, and the containing ratio of the (meth) acrylic acid ester monomer unit in the particulate polymer B is 50 to 80% by weight; and
(8) the lithium ion secondary battery according to any of (1) to (7), the lithium ion secondary battery being a laminated type.

### {Advantageous Effects of Invention}

According to the lithium ion secondary battery of the present invention, the swelling of the cell can be suppressed and favorable performance is achieved in a high temperature environment and a low temperature environment.

### {Description of Embodiments}

Hereinafter, a lithium ion secondary battery of the present invention will be described. The lithium ion secondary battery of the present invention is a lithium ion secondary battery including a positive electrode, a negative electrode, an electrolytic solution, and a separator, wherein the negative electrode includes a negative electrode active material layer formed from a slurry composition for a negative electrode which includes a binder composition for a negative electrode including a particulate polymer A containing an aliphatic conjugated diene monomer unit, and a negative electrode active material, a swelling degree of the binder composition for a negative electrode with respect to the electrolytic solution obtained by dissolving an electrolyte in a solvent having a solubility parameter of 8 to 13 (cal/cm³)^{1/2} is 1 to 2 times, a repeating tensile strength of the binder composition for a negative electrode swollen by the electrolytic solution is 0.49 x 10⁵ N/m² to 19.61 x 10⁵ N/m² (0.5 to 20 Kg/cm²) at a low extension modulus of 15%, the positive electrode includes a positive electrode active material layer formed from a slurry composition for a positive electrode which includes a binder composition for a positive electrode including a particulate polymer B containing an ethylenically unsaturated carboxylic acid monomer unit, and a positive electrode active material, a swelling degree of the binder composition for a positive electrode with respect to the electrolytic solution obtained by dissolving an electrolyte in a solvent having a solubility parameter of 8 to 13 (cal/cm³)^{1/2} is 1 to 5 times, and a repeating tensile strength of the binder composition for a positive electrode swollen by the electrolytic solution is 1.96 x 10⁴ N/m² to 4.90 x 10⁵ N/m² (0.2 to 5 Kg/cm²) at a low extension modulus of 15%.

### (Binder Composition for Negative Electrode)

The binder composition for a negative electrode used for a lithium ion secondary electrode of the present invention includes a particulate polymer A containing an aliphatic conjugated diene monomer unit and preferably includes the particulate polymer A and a medium, or the particulate polymer A, a water-soluble polymer, and a medium. The aliphatic conjugated diene monomer unit indicates a structural unit formed by polymerization of an aliphatic conjugated diene monomer. Examples of the aliphatic conjugated diene monomer include 1,3-butadiene, isoprene, 2,3-dimethyl-1,3-butadiene, 2-ethyl-1,3-butadiene, 1,3-pentadiene, chloroprene, and the like. Among these, 1, 3-butadiene and isoprene are preferable and 1,3-butadiene is more preferable. These aliphatic conjugated diene monomers can be used alone or in combination of two or more kinds.

The containing ratio of the aliphatic conjugated diene monomer unit in the particulate polymer A is preferably 20 to 50% by weight, more preferably 25 to 45% by weight, and particularly preferably 30 to 40% by weight with respect to 100% by weight of the total monomer units contained in the particulate polymer A, from the viewpoint in that balance between cycle characteristics and adhesiveness of the secondary battery can be achieved. When the containing ratio of the aliphatic conjugated diene monomer unit is too large, there is a concern that the adhesiveness between the negative electrode active materials is lowered when the particulate polymer A is used for a negative electrode active material layer. Meanwhile, when the containing ratio of the aliphatic conjugated diene monomer unit is too small, there is a concern that the swelling of the cell increases and thus the cycle characteristics are lowered when the particulate polymer A is used as a negative electrode.

In the present invention, it is preferable that the particulate polymer A further contain an aromatic vinyl monomer unit. The aromatic vinyl monomer unit indicates a structural unit formed by polymerization of an aromatic vinyl monomer. Examples of the aromatic vinyl monomer include styrene, α-methylstyrene, vinyltoluene, divinylbenzene, sodium p-styrenesulfonate, and the like. Among these, styrene and sodium p-styrenesulfonate are preferable and styrene is more preferable.

The containing ratio of the aromatic vinyl monomer unit in the particulate polymer A is preferably 50 to 75% by weight, more preferably 55 to 70% by weight, and particularly preferably 60 to 65% by weight with respect to 100% by weight of the total monomer units contained in the particulate polymer A, from the viewpoint in that balance between adhesiveness and cycle characteristics of the secondary battery can be achieved. When the containing ratio of the aromatic vinyl monomer unit is too large, there is a concern that the swelling of the cell increases and thus the cycle characteristics are lowered when the particulate polymer A is used as a negative electrode. Meanwhile, the containing ratio of the aromatic vinyl monomer unit is too small, there is a concern that the adhesiveness between the negative electrode active materials is lowered when the particulate polymer A is used for a negative electrode active material layer.

In the present invention, it is preferable that the particulate polymer A further contain an ethylenically unsaturated carboxylic acid monomer unit. The ethylenically unsaturated carboxylic acid monomer unit indicates a structural unit formed by polymerization of an ethylenically unsaturated carboxylic acid monomer. Examples of the ethylenically unsaturated carboxylic acid monomer include ethylenically unsaturated monocarboxylic acid such as acrylic acid and methacrylic acid; ethylenically unsaturated polyvalent carboxylic acid such as itaconic acid, maleic acid, fumaric acid, maleic anhydride, and citraconic anhydride and anhydrides thereof; a partial ester compound of ethylenically unsaturated polyvalent carboxylic acid such as monobutyl fumarate, monobutyl maleate, and mono 2-hydroxypropyl maleate; and the like. Among these, acrylic acid, methacrylic acid, and itaconic acid are preferably used and itaconic acid is more preferably used.

The containing ratio of the ethylenically unsaturated carboxylic acid monomer unit in the particulate polymer A is preferably 0.5 to 10% by weight, more preferably 1 to 8% by weight, and particularly preferably 1.5 to 6% by weight with respect to 100% by weight of the total monomer units contained in the particulate polymer A, from the viewpoint in that balance between adhesiveness and voltage resistance of the secondary battery can be achieved. When the containing ratio of the ethylenically unsaturated carboxylic acid monomer unit is too large, there is a concern that durability of the lithium ion secondary battery is lowered when the particulate polymer A is used for the lithium ion secondary battery negative electrode. Meanwhile, when the containing ratio of the ethylenically unsaturated carboxylic acid monomer unit is too small, there is a concern that the adhesiveness between the negative electrode active materials is lowered when the negative electrode active material layer is formed.

In addition to the aliphatic conjugated diene monomer unit, the aromatic vinyl monomer unit, and the ethylenically unsaturated carboxylic acid monomer unit described above, the particulate polymer A may contain another monomer unit which is copolymerizable therewith. Another monomer unit which is copolymerizable therewith indicates a structural unit obtained by polymerization of another monomer which is copolymerizable therewith. Examples of such another monomer unit include an unsaturated carboxylic acid alkyl ester monomer unit, a vinyl cyanide-based monomer unit, an unsaturated monomer unit having a hydroxyalkyl group, an unsaturated carboxylic acid amide monomer unit, and the like.

The containing ratio of another monomer unit, which is copolymerizable with those described above, in the particulate polymer A is, in terms of total ratio, preferably 0 to 20% by weight, more preferably 0.1 to 15% by weight, and particularly preferably 0.2 to 10% by weight.

The glass transition temperature of the particulate polymer A is preferably -40 to +50°C, more preferably -30 to +40°C, andstillmorepreferably-20 to+30°C, from the viewpoint in that breaking strength and flexibility of the particulate polymer A can be improved. According to this, adhesion strength between the negative electrode active material layer and a current collector can be improved in a case where the particulate polymer A is used for the negative electrode for a secondary battery.

The particulate polymer A can be obtained in such a manner that a monomer mixture containing the above-described monomer is polymerized in an aqueous medium. Incidentally, asamedium contained in the binder composition for a negative electrode, an aqueous medium to be used for polymerization can be used. The polymerizing method of the particulate polymer A is not particularly limited, and it is possible to use any method of a solution polymerization method, a suspension polymerization method, a bulk polymerization method, an emulsion polymerization method, and the like. As the polymerization reaction, it is possible to use any reaction of ion polymerization, radical polymerization, living radical polymerization, and the like. Examples of a polymerization initiator which is used for polymerization include organic peroxides such as lauroyl peroxide, diisopropylperoxydicarbonate, di-2-ethylhexylperoxydicarbonate, t-butylperoxypivalate, and 3,3,5-trimethylhexanoilperoxide; azo compounds such as α,α'-azobisisobutyronitrile; ammonium persulfate; potassium persulfate; and the like.

The swelling degree of the binder composition for a negative electrode of the present invention with respect to the electrolytic solution is 1 to 2 times, preferably 1 to 1.8 times, and more preferably 1 to 1.6 times. Here, the swelling degree of the binder composition for a negative electrode indicates a swelling degree with respect to an electrolytic solution obtained by dissolving an electrolyte in a solvent having a solubility parameter of 8 to 13 (cal/cm³)^{1/2}.

Further, the solubility parameter (SP value) can be obtained by the method described in "Polymer Handbook" VII Solubility Parament Values, pp 519-559 edited by E. H. Immergut (John Wiley & Sons, Inc., the third edition, published in 1989) . However, as for one which is not described in this publication can be obtained according to a "molecular attraction constant method" suggested by Small. This method is a method for obtaining a characteristic value of a functional group (atomic group) constituting a compound molecule, that is, the SP value (δ) according to the following formula using a total of molecular attraction constants (G), a molecular weight (M), and a specific weight (d).
δ = ∑G/V = d∑G/M (V; specific volume, M; molecular weight, d; specific weight)

When the swelling degree of the binder composition for a negative electrode is too large, the durability of the lithium ion secondary battery is lowered when the binder composition for a negative electrode is used for the lithium ion secondary battery negative electrode.

In order to set the swelling degree of the binder composition for a negative electrode to be in the above-described range, the kind or amount of the polymerizable monomer constituting the particulate polymer A may be adjusted or the kind or amount of a water-soluble polymer to be described later may be adjusted. Specifically, the adjustment can be performed by decreasing the containing ratio of the aliphatic conjugated diene monomer unit or increasing the containing ratio of the aromatic vinyl monomer unit.

Further, the repeating tensile strength of the binder composition for a negative electrode used for the lithium ion secondary battery of the present invention is 0.49 x 10⁵ N/m² to 19. 61 x 10⁵ N/m² (0.5 to 20 Kg/cm²), preferably 1 to 18 Kg/cm², and more preferably 5 to 15 Kg/cm², at a low extension modulus of 15%. Here, the tensile strength at a low extension modulus of 15% is a value obtained by measuring a strength corresponding to 15% extension, for example, according to JIS-K7312 in such a manner that the strength is repeatedly applied predetermined times to a film consisting of the binder composition for a negative electrode swollen by the above-described electrolytic solution.

In order to set the repeating tensile strength of the binder composition for a negative electrode to be in the above-described range, the kind or amount of the polymerizable monomer constituting the particulate polymer A may be adjusted or the kind or amount of a water-soluble polymer to be described later may be adjusted. Specifically, the adjustment can be performed by decreasing the containing ratio of the aliphatic conjugated diene monomer unit constituting the particulate polymer A or increasing the containing ratio of the aromatic vinyl monomer unit.

When the repeating tensile strength of the binder composition for a negative electrode is too large, the adhesiveness between the negative electrode active materials is lowered when the binder composition for a negative electrode is used for the negative electrode active material layer. Meanwhile, when the repeating tensile strength of the binder composition for a negative electrode is too small, the life time of the battery is lowered when the binder composition for a negative electrode is used for the lithium ion secondary battery.

Further, the tetrahydrofuran-insoluble content of the binder composition for a negative electrode used for the lithium ion secondary battery of the present invention is preferably 75 to 95% and more preferably 80 to 95%. Here, the tetrahydrofuran-insoluble content is a value representing a weight ratio of solid content insoluble in tetrahydrofuran among the total solid content of the binder composition for a negative electrode. When the tetrahydrofuran-insoluble content of the binder composition for a negative electrode is too large, there is a concern that the adhesiveness between the negative electrode active materials is lowered when the binder composition for a negative electrode is used for the negative electrode active material layer. Meanwhile, when the tetrahydrofuran-insoluble content of the binder composition for a negative electrode is too small, there is a concern that the life time of the battery is lowered when the binder composition for a negative electrode is used for the lithium ion secondary battery.

In order to set the tetrahydrofuran-insoluble content of the binder composition for a negative electrode to be in the above-described range, the kind or amount of the polymerizable monomer constituting the particulate polymer A may be adjusted or the kind or amount of a water-soluble polymer to be described later may be adjusted. Specifically, the adjustment can be performed by changing the glass transition temperature of the particulate polymer A, that is, changing the containing ratio of the aliphatic conjugated diene monomer unit or the aromatic vinyl monomer unit, or changing the kind or amount of a molecular weight modifier used when the particulate polymer A is prepared.

In the present invention, the number average particle diameter of the particulate polymer A is preferably 50 to 500 nm and more preferably 70 to 400 nm, from the viewpoint of enhancing the strength and flexibility of the negative electrode for a secondary battery to be obtained. The number average particle diameter can be easily measured by a transmission electron microscope method, a Coulter counter, a laser diffraction scattering method, or the like.

The containing ratio of the particulate polymer A in the binder composition is preferably 50 to 100% by weight and more preferably 60 to 99% by weight.

### (Water-Soluble Polymer)

It is preferable that the binder composition for a negative electrode used for the lithium ion secondary battery of the present invention include a water-soluble polymer. The water-soluble polymer used for the binder composition for a negative electrode of the present invention is not particularly limited, and it is preferable to use a cellulose-based polymer such as carboxymethyl cellulose (CMC), a polymer containing an ethylenically unsaturated carboxylic acid monomer unit, or the like, from the viewpoint of improving the stability of a slurry.

In a case where a polymer containing the above-described ethylenically unsaturated carboxylic acid monomer unit is used as the water-soluble polymer, as a monomer constituting the polymer, it is possible to use the above-described ethylenically unsaturated carboxylic acid monomers which can be used for the binder composition for a negative electrode. Among these, acrylic acid and methacrylic acid are preferably used and methacrylic acid is more preferably used. The containing ratio of the ethylenically unsaturated carboxylic acid monomer unit in the polymer containing the ethylenically unsaturated carboxylic acid monomer unit is preferably 20 to 60% by weight, more preferably 25 to 55% by weight, and particularly preferably 30 to 50% by weight with respect to 100% by weight of the total monomer units contained in the polymer.

In the case of using a polymer containing an ethylenically unsaturated carboxylic acid monomer unit as the water-soluble polymer, another copolymerizable monomer unit may be contained in addition to the above-described ethylenically unsaturated carboxylic acid monomer unit. Examples of such another monomer unit include a crosslinkable monomer unit, a fluorine-containing (meth)acrylic acid ester monomer unit, a reactive surfactant unit, a (meth) acrylic acid ester monomer unit other than a fluorine-containing (meth) acrylic acid ester monomer unit, and the like.

As a crosslinkable monomer forming the crosslinkable monomer unit, it is possible to use a monomer that may form a crosslinking structure as a result of polymerization. Examples of the crosslinkable monomer may include a monomer having two or more reactive groups per molecule. Examples of such a monomer include a monofunctional monomer having a thermally crosslinkable group and one olefinic double bond per molecule, a multifunctional monomer having two or more olefinic double bonds per molecule, and the like. Examples of the thermally crosslinkable group contained in the monofunctional monomer include an epoxy group, an N-methylolamido group, an oxetanyl group, an oxazoline group, and the like. Among these, an epoxy group is preferable in terms of easily adjusting crosslinking and crosslinking density.

The containing ratio of the crosslinkable monomer unit in the polymer containing an ethylenically unsaturated carboxylic acid monomer unit is preferably 0.1 to 2% by weight, more preferably 0.2 to 1.5% by weight, and still more preferably 0.5 to 1% by weight, from the viewpoint of enhancing solubility and dispersibility of the water-soluble polymer with respect to water.

The containing ratio of the fluorine-containing (meth) acrylic acid ester monomer unit in the polymer containing an ethylenically unsaturated carboxylic acid monomer unit is preferably 1 to 20% by weight, more preferably 2 to 15% by weight, still more preferably 5 to 10% by weight.

As the fluorine-containing (meth)acrylic acid ester monomer forming the fluorine-containing (meth)acrylic acid ester monomer, for example, a monomer represented by the following General Formula (1) is exemplified.

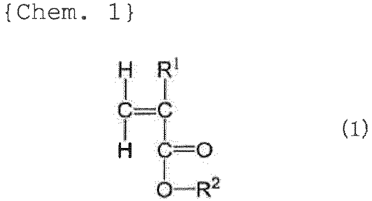

In the above General Formula (1), R¹ represents a hydrogen atom or a methyl group, and R² represents a hydrocarbon group having 1 to 18 carbons which contains a fluorine atom. Further, the number of fluorine atoms contained in R² may be 1 or 2 or more.

The containing ratio of the (meth)acrylic acid ester monomer unit other than a fluorine-containing (meth)acrylic acid ester monomer unit in the polymer containing an ethylenically unsaturated carboxylic acid monomer unit is preferably 30 to 70% by weight, more preferably 35 to 70% by weight, and still more preferably 40 to 70% by weight.

A reactive surfactant forming a reactive surfactant unit is a monomer having a polymerizable group that is copolymerizable with another monomer and also having a surfactant group (a hydrophilic group and a hydrophobic group) .

In general, the reactive surfactant has a polymerizable unsaturated group. After polymerization, this group also acts as a hydrophobic group. Examples of the polymerizable unsaturated group contained in the reactive surfactant include a vinyl group, an allyl group, a vinylidene group, a propenyl group, an isopropenyl group, an isobutylidene group, and the like. The kind of such a polymerizable unsaturated group may be one or two or more.

The containing ratio of the reactive surfactant unit in the polymer containing an ethylenically unsaturated carboxylic acid monomer unit is preferably 0.1 to 15% by weight, more preferably 0.2 to 10% by weight, and still more preferably 0.5 to 5% by weight.

Examples of the (meth)acrylic acid ester monomer constituting the (meth) acrylic acid ester monomer unit other than the fluorine-containing (meth) acrylic acid ester monomer unit include acrylic acid alkyl esters such as methyl acrylate, ethyl acrylate, n-propyl acrylate, isopropyl acrylate, and n-butyl acrylate; methacrylic acid alkyl esters such as methyl methacrylate, ethyl methacrylate, n-propyl methacrylate, isopropylmethacrylate, and n-butyl methacrylate; and the like. One kind of these (meth)acrylic acid ester monomers may be used alone or two or more kinds thereof may be used in combination.

The containing ratio of the (meth)acrylic acid ester monomer unit other than a fluorine-containing (meth)acrylic acid ester monomer unit in the polymer containing an ethylenically unsaturated carboxylic acid monomer unit is preferably 30 to 70% by weight, more preferably 35 to 70% by weight, and still more preferably 40 to 70% by weight.

The containing ratio of the water-soluble polymer in the binder composition for a negative electrode is preferably 0.1 to 50 parts by weight and more preferably 0.2 to 40 parts by weight with respect to 100 parts by weight of the particulate polymer A.

### (Negative Electrode Active Material)

The negative electrode active material used for the lithium ion secondary battery of the present invention includes a Si (containing) compound that occludes and releases lithium. Examples of the Si (containing) compound include SiOC, SiC, SiOx, and the like. In addition, as the negative electrode active material, a transition metal such as Sn or Zn that occludes and releases lithium may be used. Among these, SiOC, SiC, SiOx are preferably used.

SiOₓ (0.01 ≤ x < 2) is formed from at least one of SiO and SiO₂, and Si. In general, SiOₓ is obtained by heating a mixture of SiO₂ and Si (metal silicon), cooling the generated silicon monoxide gas, and forming deposition thereof.

It is preferable that SiOC and SiC be formed by compositing at least one kind of an oxygen-containing Si compound (SiO, SiO₂, or SiOₓ) and metal silicon, and conductive carbon. By compositing with the conductive carbon, it is possible to suppress the swelling of the negative electrode active material itself. Examples of the compositing method incl ude a method of compositing by coating an oxygen-containing Si compound and/or metal silicon with conductive carbon, a method of compositing by granulating a mixture including at least one kind of an oxygen-containing Si compound and metal silicon, and conductive carbon, and like.

The method of coating at least one kind of an oxygen-containing Si compound and metal silicon with carbon is not particularly limited, and examples thereof include a method of performing disproportionation by heat-treating an oxygen-containing Si compound and/or metal silicon, a method of performing chemical vapor deposition by heat-treating an oxygen-containing Si compound and/or metal silicon, and the like. Specific examples thereof include a method of disproportionating SiOₓ to a complex of silicon and silicon dioxide and performing chemical vapor deposition on the surface thereof by heat-treating SiOₓ under atmosphere including at least organic gas and/or water vapor at a temperature range of 900 to 1, 400°C, preferably 1,000 to 1, 400°C, more preferably 1,050 to 1, 300°C, and still more preferably 1,100 to 1,200°C; a method in which a silicon complex or the like, which is obtained by performing disproportionation by preliminarily heat-treating an oxygen-containing Si compound and/or metal silicon under an inert gas atmosphere at 900 to 1,400°C, preferably 1,000 to 1,400°C, and more preferably 1,100 to 1,300°C, is pulverized to have a particle size of preferably 0.1 to 50 µm, and the resultant is preliminarily heated under an inert gas atmosphere at 800 to 1,400°C, followed by heat-treating under atmosphere including at least organic gas and/or water vapor at a temperature range of 800 to 1, 400°C, preferably 900 to 1,300°C, and more preferably 1,000 to 1,200°C so as to perform chemical vapor deposition on the surface thereof; a method of performing disproportionation in such a manner that an oxygen-containing Si compound and/or metal silicon is preliminarily subjected to chemical vapor deposition treatment using an organic gas and/or water vapor at a temperature range of 500 to 1,200°C, preferably 500 to 1,000°C, and more preferably 500 to 900°C, followed by heat-treating under an inert gas atmosphere at a temperature range of 900 to 1, 400°C, preferably 1,000 to 1, 400°C, and more preferably 1,100 to 1,300°C; and the like.

Examples of the method of compositing by granulating a mixture including at least one kind of an oxygen-containing Si compound and metal silicon, and conductive carbon include a so-called spraying granulation method in which a dispersion element (slurry) obtained by dispersing the mixture in a solvent is prepared and the dispersion element is sprayed and dried using an atomizer or the like to prepare granulated particles; and the like.

Further, as the negative electrode active material, in addition to the above-described Si (containing) compound and/or the transition metal, it is preferable to further use carbon in combination. Examples of the carbon include a carbonaceous material and a graphite material. The carbonaceous material indicates generally a carbon material having a low degree of graphitization (low crystallinity) which is obtained by subjecting a carbon precursor to heat treatment (carbonization) at 2,000°C or lower. The graphite material indicates a graphite material having high crystallinity close to the crystallinity of graphite which is obtained by subjecting an easily graphitizable carbon to heat treatment at 2,000°C or higher.

Examples of the carbonaceous material include easily graphitizable carbon whose carbon structure easily varies depending on a heat treatment temperature, and non-graphitizable carbon having a structure close to an amorphous structure that is typified by glassy carbon. Examples of the easily graphitizable carbon include a carbon material which is produced with a raw material that is tar pitch obtained from petroleum or coal. Examples thereof include coke, meso-carbon microbeads (MCMB), mesophase pitch-based carbon fibers, thermal decomposition vapor-phase grown carbon fibers, and the like. The MCMB is carbon fine particles obtained by separating and extracting mesophase microspheres that are generated in the process of heating pitch materials at approximately 400°C. The mesophase pitch-based carbon fibers are carbon fibers produced with a raw material that is mesophase pitch obtained by growth and coalescence of the mesophase microspheres.

Examples of the non-graphitizable carbon include a calcined product of phenolic resin, polyacrylonitrile-based carbon fibers, quasi-isotropic carbon, a calcined product of furfuryl alcohol resin (PFA), and the like.

Examples of the graphite material include natural graphite and artificial graphite. As the artificial graphite, mainly, it is possible to use artificial graphite obtained by heat treatment at 2, 800°C or higher, graphitized MCMB obtained by heat treatment of MCMB at 2,000°C or higher, graphitized mesophase pitch-based carbon fibers obtained by heat treatment of mesophase pitch-based carbon fibers at 2, 000°C or higher, and the like.

Further, in the negative electrode active material, it is preferable to contain 3 to 60 parts by weight of silicon and more preferable to contain 4 to 50 parts by weight of silicon with respect to 100 parts by weight of the total carbon amount contained in the negative electrode active material. When the amount of silicon contained in the negative electrode active material is too large, the life time of the battery is lowered when the negative electrode active material is used for the lithium ion secondary battery. Meanwhile, when the amount of silicon contained in the negative electrode active material is too small, the battery capacity is lowered when the negative electrode active material is used for the lithium ion secondary battery.

As the negative electrode active material, a material which is granulated in a particulate form is preferably used. When the shape of particles is spherical, it is possible to form an electrode having higher density at the time of forming an electrode. In a case where the negative electrode active material is particulate, the volume average particle diameter thereof is generally 0.1 to 100 µm, preferably 1 to 50 µm, and more preferably 5 to 20 µm.

### (Slurry Composition for Negative Electrode)

The slurry composition for a negative electrode can be obtained by mixing the binder composition for a negative electrode, the negative electrode active material, and the water-soluble polymer which are described above, and materials, such as a medium for adjusting a viscosity of the slurry, a preservative, a thickener, an electrical conductivity imparting material, a reinforcement material, a dispersing agent, a leveling agent, an antioxidant, and an electrolytic solution additive having a function such as suppression of electrolytic solution decomposition, which are used as necessary.

The containing ratio of the above-described particulate polymer A in the slurry composition for a negative electrode is preferably 0.5 part by weight or more, more preferably 1 part by weight or more, and particularly preferably 1.5 parts by weight or more but preferably 10 parts by weight or less, more preferably 5 parts by less, and particularly preferably 3 parts by weight or less, with respect to 100 parts by weight of the negative electrode active material.

The mixing method is not particularly limited, and examples thereof include methods using a mixing apparatus such as a stirring type, a shaking type, and a rotation type. Further, methods using dispersion kneaders such as a homogenizer, a ball mill, a sand mill, a roll mill, a planetary mixer, and a planetary kneader are exemplified.

### (Medium)

As the medium, the same medium as the medium used in the polymerization of the binder composition for a negative electrode can be used. The ratio of the medium is not particularly limited, and can be appropriately adjusted such that the slurry has properties suitable for a later process. Specifically, the ratio of the medium can be adjusted such that the ratio of the solid content (the material that remains as a constituent component of an electrode active material layer after drying and heating of the slurry) in the slurry composition for a negative electrode is 30 to 70% by weight and preferably 40 to 60% by weight.

### (Preservative)

As the preservative, arbitrary preservatives can be used. In particular, a benzoisothiazoline-based compound represented by the following General Formula (2), 2-methyl-4-isothiazolin-3-one, or a mixture thereof is preferably used, and particularly, the mixture thereof is more preferably used.

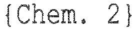

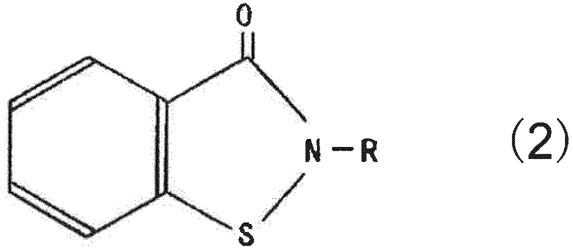

In Formula (2), R represents a hydrogen atom or an alkyl group having 1 to 8 carbons. When a mixture of the benzoisothiazoline-based compound represented by the above General Formula (2) and 2-methyl-4-isothiazolin-3-one is used, the ratio of these compounds is, in terms of weight ratio, preferably 1 : 10 to 10 : 1. The containing ratio of the preservative in the slurry composition for a negative electrode is preferably 0.001 to 0.1 part by weight, more preferably 0.001 to 0.05 part by weight, and still more preferably 0.001 to 0.01 part by weight, based on 100 parts by weight of the monomer composition.

### (Thickener)

Examples of the thickener include the above-described cellulose-based polymers and ammonium salts and alkali metal salts thereof; (modified) poly (meth) acrylic acid and ammonium salts and alkali metal salts thereof; polyvinyl alcohols such as (modified) polyvinyl alcohol, a copolymer of acrylic acid or an acrylic acid salt and vinyl alcohol, and a copolymer of maleic anhydride or maleic acid, or fumaric acid and vinyl alcohol; polyethylene glycol, polyethylene oxide, polyvinylpyrrolidone, modified polyacrylic acid, oxidized starch, starch phosphate, casein, various modified starch, acrylonitrile-butadiene copolymer hydrides; and the like. Here, " (modified) poly" means "unmodified poly" or "modified poly, " and " (meth) acrylic" means "acrylic" or "methacrylic." The containing ratio of the thickener in the slurry composition for a negative electrode is preferably 0.1 to 10% by weight, from the viewpoint in that dispersibility of active materials or the like in the slurry can be enhanced and a smooth electrode can be obtained, and the viewpoint in that a secondary battery to be obtained exhibits excellent load characteristics and cycle characteristics.

### (Electrical Conductivity Imparting Material)

As the electrical conductivity imparting material, conductive carbon such as acetylene black, ketchen black, carbon black, vapor phase grown carbon fibers, and carbon nanotube can be used. Alternatively, carbon powders such as graphite, and fibers and foil of various metals can also be used. By using the electrical conductivity imparting material, it is possible to improve electrical contact between electrode active materials. In particular, in a case where the electrical conductivity imparting material is used for a lithium ion secondary battery, discharge load characteristics can be improved.

### (Reinforcement Material)

As the reinforcement material, various inorganic and organic fillers in a spherical shape, a plate shape, a rod shape, and a fiber shape can be used. By using the reinforcement material, it is possible to obtain a tough and flexible electrode and thus excellent long-term cycle characteristics can be obtained.

The containing ratio of the electrical conductivity imparting material and a reinforcement agent in the slurry composition for a negative electrode is generally 0.01 to 20 parts by weight, and preferably 1 to 10 parts by weight with respect to 100 parts by weight of the negative electrode active material, from the viewpoint of exhibiting a high capacity and high load characteristics.

### (Dispersing agent)

Examples of the dispersing agent include an anionic compound, a cationic compound, a nonionic compound, and a high molecular compound. The dispersing agent is selected depending on the electrode active material or a conducting agent to be used. The containing ratio of the dispersing agent in the slurry composition for a negative electrode is preferably 0.01 to 10% by weight, from the viewpoint in that, since a slurry composition for a negative electrode having excellent stability can be obtained, a smooth electrode can be obtained, and the viewpoint in that a battery having a high capacity can be obtained.

### (Leveling Agent)

Examples of the leveling agent include a surfactant such as an alkyl-based surfactant, a silicon-based surfactant, a fluorine-based surfactant, or a metal-based surfactant. By mixing the above-described surfactant, it is possible to prevent repelling that occurs during a coating process or improve smoothness of the negative electrode. The containing ratio of the leveling agent in the slurry composition for a negative electrode is preferably 0.01 to 10% by weight from the viewpoint of productivity during the manufacture of electrodes, smoothness, and battery characteristics.

### (Antioxidant)

Examples of the antioxidant include a phenol compound, a hydroquinone compound, an organic phosphorus compound, a sulfur compound, a phenylene diamine compound, a polymer type phenol compound, and the like. The polymer type phenol compound is a polymer having a phenol structure in the molecule . It is preferable to use a polymer type phenol compound having a weight average molecular weight of 200 to 1, 000 and preferably 600 to 700. The containing ratio of the antioxidant in the slurry composition for a negative electrode is preferably 0.01 to 10% by weight and more preferably 0.05 to 5% by weight, from the viewpoint of stability of the slurry composition for a negative electrode, battery capacity, and cycle characteristics.

### (Lithium Ion Secondary Battery Negative Electrode)

The lithium ion secondary battery negative electrode of the present invention is an electrode having a negative electrode active material layer obtained by applying the slurry composition for a negative electrode and drying it, and a current collector. The producing method for a negative electrode is not particularly limited, and is a method for forming a negative electrode active material layer in such a manner that a slurry composition for a negative electrode is applied to at least one surface of the current collector and preferably to the both surfaces thereof, followed by subjecting heat drying.

The method of applying the slurry composition for a negative electrode to the current collector is not particularly limited. For example, methods such as a doctor blade method, a dip method, a reverse roll method, a direct roll method, a gravure method, an extrusion method, comma direct coating, slide die coating, and a brush method are exemplified. Examples of the drying method include drying by warm air, hot air, or low wet air, vacuum drying, a drying method with irradiation of (far-) infrared rays, electron beams, or the like. The drying time is generally 5 to 30 minutes and the drying temperature is generally 40 to 180°C. The active material layer may be formed by repeatedly performing applying and drying several times.

The material of the current collector is not particularly limited as long as it has an electric conductivity and electrochemical resistance. However, a metal material is preferable since it has heat resistance. Examples of the metal material include iron, copper, aluminum, nickel, stainless steel, titanium, tantalum, gold, platinum, and the like.

The shape of the current collector is not particularly limited, and a sheet shape is preferable. In order to enhance the adhesion strength with the negative electrode active material layer, it is preferable that the current collector be used after a surface thereof is roughened in advance. Examples of the roughening method include a mechanical grinding method, an electrolytic grinding method, a chemical grinding method, and the like. In the mechanical grinding method, a cloth or paper for grinding having abrasive particles adhering thereon, agrindstone, an emery wheel, and a wire brush provided with steel wire may be used. Further, in order to improve the adhesion strength of the negative electrode active material layer and conductivity, an intermediate layer may be formed on the surface of the current collector.

After the negative electrode active material layer is formed on the current collector, it is preferable to perform pressing treatment such as press working. The press working is performed using, for example, a roll press machine using metal rolls, elastic rolls, and heating rolls, a sheet press machine, or the like. The pressing may be performed at room temperature or under heating as long as the pressing temperature is a temperature lower than the temperature at which the coating film of the negative electrode active material layer is dried. In general, the pressing is performed at room temperature (an indication of room temperature is 15 to 35°C) .

The press working by using a roll press machine (roll pressing) is preferable since the press working can be continuously performed on a long sheet-shaped negative electrode plate. In the case of performing the roll pressing, any of constant position pressing and constant pressure pressing may be performed.

The thickness of the negative electrode active material layer is not particularly limited, and is preferably 5 to 300 µm and more preferably 30 to 250 µm.

### (Binder Composition for Positive Electrode)

The binder composition for a positive electrode, which is used for the lithium ion secondary battery of the present invention, includes the particulate polymer B containing an ethylenically unsaturated carboxylic acid monomer unit, and preferably includes the particulate polymer B and a dispersion medium, or the particulate polymer B, a fluorine-based polymer, and a medium. As the ethylenically unsaturated carboxylic acid monomer constituting an ethylenically unsaturated carboxylic acid monomer unit, the above-described ethylenically unsaturated carboxylic acid monomers, which can be used for the binder composition for a negative electrode, can be exemplified. Among these, acrylic acid, methacrylic acid, and itaconic acid are preferable and acrylic acid and methacrylic acid are more preferable. The containing ratio of the ethylenically unsaturated carboxylic acid monomer unit in the particulate polymer B is 20 to 50% by weight, preferably 25 to 45% by weight, and particularly preferably 30 to 40% by weight, with respect to 100% by weight of the total monomer units contained in the particulate polymer B. When the containing ratio of the ethylenically unsaturated carboxylic acid monomer unit contained in the particulate polymer B is too large, there is a concern that durability of the lithium ion secondary battery is lowered when the binder composition for a positive electrode is used for the lithium ion secondary battery positive electrode. Meanwhile, when the containing ratio of the ethylenically unsaturated carboxylic acid monomer unit is too small, there is a concern that the life time of the lithium ion secondary battery is lowered when the binder composition for a positive electrode is used for the lithium ion secondary battery positive electrode.

It is preferable that the particulate polymer B further contain a (meth)acrylic acid ester monomer unit. Examples of a monomer providing a (meth) acrylic acid ester monomer unit include a (meth)acrylic acid alkyl ester monomer and a (meth)acrylic acid ester monomer having a functional group at the side chain. Among these, a (meth)acrylic acid alkyl ester monomer is preferable.

Examples of the (meth) acrylic acid alkyl ester monomer may include compounds such as acrylic acid alkyl esters such as 2-ethylhexyl acrylate (2-EHA), ethyl acrylate, propyl acrylate, isopropyl acrylate, n-butyl acrylate, isobutyl acrylate, t-butyl acrylate, n-amyl acrylate, isoamyl acrylate, n-hexyl acrylate, 2-ethylhexyl acrylate, hexyl acrylate, nonyl acrylate, lauryl acrylate, and stearyl acrylate; and methacrylic acid alkyl esters such as ethyl methacrylate, propyl methacrylate, isopropyl methacrylate, n-butyl methacrylate, isobutyl methacrylate, t-butyl methacrylate, n-amyl methacrylate, isoamyl methacrylate, n-hexyl methacrylate, 2-ethylhexylmethacrylate, octylmethacrylate, isodecyl methacrylate, lauryl methacrylate, tridecyl methacrylate, and stearyl methacrylate. Among these, 2-ethylhexyl acrylate, ethyl acrylate, and n-butyl acrylate are preferable and 2-ethylhexyl is more preferable. The containing ratio of the (meth)acrylic acid ester monomer in the particulate polymer B is 50 to 80% by weight, preferably 55 to 75% by weight, and more preferably 60 to 70% by weight, with respect to 100% by weight of the total monomer units contained in the particulate polymer B.

In addition to the ethylenically unsaturated carboxylic acid monomer unit and the (meth)acrylic acid ester monomer unit described above, the particulate polymer B may contain another monomer unit which is copolymerizable therewith. Another monomer unit which is copolymerizable therewith indicates a structural unit obtained by polymerization of another monomer which is copolymerizable therewith. Examples of such another monomer unit include a vinyl cyanide-based monomer unit, an unsaturated monomer unit having a hydroxyalkyl group, an unsaturated carboxylic acid amide monomer unit, and the like.

The containing ratio of another monomer unit, which is copolymerizable with those described above, in the particulate polymer B is, in terms of total ratio, preferably 0 to 40% by weight, more preferably 0.5 to 35% by weight, and particularly preferably 1 to 30% by weight.

The glass transition temperature of the particulate polymer B is preferably -40 to +50°C, more preferably -30 to +40°C, and still more preferably -20 to +30°C.

In the present invention, the number average particle diameter of the particulate polymer B is preferably 50 to 500 nm and more preferably 70 to 400 nm, from the viewpoint of enhancing the strength and flexibility of the negative electrode for a secondary battery to be obtained. The number average particle diameter can be easily measured by a transmission electron microscope method, a Coulter counter, a laser diffraction scattering method, or the like.

The containing ratio of the particulate polymer B in the binder composition for a positive electrode is preferably 50 to 100% by weight and more preferably 60 to 99% by weight.

In addition to the above-described particulate polymer B, a fluorine-based polymer such as polytetrafluoroethylene or polyvinylidene fluoride may be used for the binder composition for a positive electrode.

The producing method of the binder composition for a positive electrode used for the lithium ion secondary battery of the present invention is not particularly limited, and the same producing method as the above-described producing method of the binder composition for a negative electrode can be used. In other words, the particulate polymer B can be obtained in such a manner that a monomer mixture containing the above-described monomer is polymerized in an aqueous medium. Incidentally, as a medium contained in the binder composition for a positive electrode, an aqueous medium to be used for polymerization can be used.

The swelling degree of the binder composition for a positive electrode of the present invention with respect to the electrolytic solution is 1 to 5 times, preferably 1 to 4 times, and more preferably 1 to 3 times. Here, the swelling degree of the binder composition for a positive electrode indicates a swelling degree with respect to an electrolytic solution obtained by dissolving an electrolyte in the above-described solvent having a solubility parameter of 8 to 13 (cal/cm³)^{1/2}. When the swelling degree of the binder composition for a positive electrode is too large, there is a concern that the durability of the lithium ion secondary battery is lowered when the binder composition for a positive electrode is used for the lithium ion secondary battery positive electrode.

In order to set the swelling degree of the binder composition for a positive electrode to be in the above-described range, the kind or amount of the polymerizable monomer constituting the particulate polymer B maybe adjusted. Specifically, the adjustment can be performed by decreasing the containing ratio of the ethylenically unsaturated carboxylic acid monomer unit or increasing the number of carbons in the ester group of the (meth)acrylic acid ester monomer unit.

Further, the repeating tensile strength of the binder composition for a positive electrode used for the lithium ion secondary battery of the present invention is 1.96 x 10⁴ N/m² to 4.90 x 10⁴ N/m² (0.2 to 5 Kg/cm²), preferably 0.5 to 4.5 Kg/cm², and more preferably 1 to 4 Kg/cm², at a low extension modulus of 15%.

In order to set the repeating tensile strength of the binder composition for a positive electrode to be in the above-described range, the kind or amount of the polymerizable monomer constituting the particulate polymer B may be adjusted. Specifically, the adjustment can be performed by decreasing the containing ratio of the ethylenically unsaturated carboxylic acid monomer unit constituting the particulate polymer B or increasing the number of carbons in the ester group of the (meth)acrylic acid ester monomer unit.

When the repeating tensile strength of the binder composition for a positive electrode is too large, there is a concern that the adhesiveness between the positive electrode active materials is lowered when the binder composition for a positive electrode is used for the positive electrode active material layer. Meanwhile, when the repeating tensile strength of the binder composition for a positive electrode is too small, there is a concern that the life time of the battery is lowered when the binder composition for a positive electrode is used for the lithium ion secondary battery.

### (Positive Electrode Active Material)

Examples of the electrode active material for a positive electrode of the lithium ion secondary battery include transition metal oxides, transition metal sulfides, lithium-containing composite metal oxides of lithium and a transition metal, organic compounds, and the like. Ti, V, Cr, Mn, Fe, Co, Ni, Cu, Mo, or the like is used as the above-described transition metal.

Examples of the transition metal oxides include MnO, MnO₂, V2O₅, V₆O₁₃, TiO₂, Cu₂V₂O₃, amorphous V₂O-P₂O₅, MoO₃, V2O₅, V₆O₁₃, and the like. Among these, MnO, V₂O₅, V₆O₁₃, and TiO₂ are preferable from the viewpoint of cycle stability and capacity. Examples of the transition metal sulfides include TiS₂, TiS₃, amorphous MoS₂, FeS, and the like. Examples of the lithium-containing composite metal oxides include lithium-containing composite metal oxides having a layered structure, lithium-containing composite metal oxides having a spinel structure, lithium-containing composite metal oxides having an olivine type structure, and the like.

Examples of the lithium-containing composite metal oxides having a layered structure include lithium-containing cobalt oxide (LiCoO₂), lithium-containing nickel oxide (LiNiO₂), lithium composite oxides of Co-Ni-Mn, lithium composite oxides of Ni-Mn-Al, lithium composite oxides of Ni-Co-Al, and the like. Examples of the lithium-containing composite metal oxides having a spinel structure include lithium manganate (LiMn₂O₄), Li[Mn_{3/2}M_{1/2}]O₄ (provided that M represents Cr, Fe, Co, Ni, Cu, and the like) in which some Mn are substituted with another transition metal, and the like. Examples of the lithium-containing composite metal oxides having an olivine type structure include olivine type lithium phosphate compounds represented by LiₓMPO₄ (in the formula, M represents at least one kind selected from Mn, Fe, Co, Ni, Cu, Mg, Zn, V, Ca, Sr, Ba, Ti, Al, Si, B, and Mo, and 0 ≤ X ≤ 2). In addition, conductive polymers such as polyacetylene and poly-p-phenylene can also be used.

Further, an iron-based oxide, which has poor electroconductance, may also be used as an electrode active material covered by a carbon material which is produced with the coexistence of a carbon source material at the time of reduction firing. Furthermore, these compounds may be partially substituted with another element. The positive electrode active material for a lithium secondary battery may also be a mixture of the above-described inorganic compound (transition metal oxides, transition metal sulfides, lithium-containing composite metal oxides, and the like) and an organic compound.

Among these, in a case where a Si (containing) compound is used as the negative electrode active material, it is preferable to use a material containing Ni as the positive electrode active material.

The average particle diameter of the positive electrode active material is generally 1 to 50 µm and preferably 2 to 30 µm, from the viewpoint in that the amount of the binder composition for a positive electrode can be reduced when a slurry composition for a positive electrode, which will be described later, is prepared and thus capacity lowering of the battery can be suppressed, and the viewpoint in that the slurry composition for a positive electrode can be easily prepared to have a viscosity suitable for coating and thus a uniform electrode can be obtained. The containing ratio of the positive electrode active material in the positive electrode active material layer is preferably 90 to 99.9% by weight and more preferably 95 to 99% by weight.

### (Slurry Composition for Positive Electrode)

The slurry composition for a positive electrode can be obtained by mixing the binder composition for a positive electrode, the positive electrode active material, and other arbitrary materials which are used as necessary. As such arbitrary materials, it is possible to exemplify the same materials as those described above that may be contained in the slurry composition for a negative electrode. The containing ratios of these arbitrary materials can also be set to the same containing ratios of those described above in the slurry composition for a negative electrode.

The preparing method for a slurry composition for a positive electrode and the forming method for a positive electrode active material layer using the same can be implemented in the same manner as the preparing method for a slurry composition for a negative electrode and the forming method for a negative electrode active material layer using the same which are described above.

### (Lithium Ion Secondary Battery Positive Electrode)

The lithium secondary battery positive electrode is formed by laminating positive electrode active material layers containing the positive electrode active material and the binder composition for a positive electrode on the current collector. The lithium ion secondary battery positive electrode can be obtained by the same producing method as the above-described producing method of the lithium ion secondary battery negative electrode. Further, as the current collector, the above-described current collector used for the lithium ion secondary battery negative electrode can be used.

The thickness of the positive electrode active material layer is not particularly limited, and is preferably 5 to 300 µm and more preferably 10 to 250 µm.

### (Separator)

As the separator used in the present invention, it is possible to use a porous film having a fine pore diameter, which does not have electron conductivity but has ion conductivity and is highly resistant to an organic solvent. Specifically, any of the following (i) to (iv) can be used.
(i) a microporous film consisting of a resin
(ii) a woven fabric made of resin fibers, or a nonwoven fabric made of the fibers
(iii) a layer of aggregate of non-conductive particles
(iv) a laminate formed by combining two or more layers using one or more layers of (i) to (iii) described above

Among these, it is preferable to use a separator in which the layer (iii) is formed in (i) or (ii) or a separator in which the layer (iii) is formed in the lithium ion secondary battery negative electrode and/or the positive electrode.

### (Layers (i) and (ii))

The microporous film (i) is a film in which a resin film is formed and a large number of fine pores are then formed. Examples of the method for forming such a microporous film may include the following methods.
(i-1) a dry method in which a resin is melt-extruded to form a film, the film is then annealed at a low temperature to grow a crystalline domain, and stretching is performed in this state to extend an amorphous region, thereby forming a microporous film
(i-2) a wet method in which a hydrocarbon solvent, an arbitrary low molecular material that may be added as necessary, and a resin are mixed, a film of the mixture is formed, and then, when the solvent and the low molecular material are gathered in an amorphous phase and formation of island phase begins, the solvent and the low molecular material are removed using another highly volatile solvent, thereby forming a microporous film

Of the dry method (i-1) and the wet method (i-2), the dry method is preferable from the viewpoint in that a large void which may reduce resistance is easily obtainable.

Examples of materials for the microporous film (i) may include resins of polyolefins (polyethylene, polypropylene, polybutene, and polyvinyl chloride) and other resins, such as polyethylene terephthalate, polycycloolefin, polyethersulfone, polyamide, polyimide, polyimideamide, polyaramide, polycycloolefin, nylon, and polytetrafluoroethylene. In particular, resins such as any of polyolefin-based resins, a mixture thereof, or a copolymer thereof are preferable since the resin is likely to form a composite with the above-described (iii) (a slurry for forming the layer (iii) may be readily applied thereonto), and the film thickness of the separator can be reduced and the active material ratio in the battery can be increased to increase a capacity per volume.

It is preferable that materials for fibers of the woven fabric or nonwoven fabric (ii) be also a polyolefin-based resin that is the same as the material for the microporous film (i) .

More specific examples of the polyolefin-based resin used as the material for the separator (i) or (ii) include a homopolymer of, for example, polyethylene or polypropylene, a copolymer thereof, and a mixture thereof. Examples of polyethylene include low-density, medium-density, and high-density polyethylenes. In terms of anti-piercing strength and mechanical strength, high-density polyethylene is preferable. Further, in order to impart flexibility, two or more kinds of the polyethylene may be mixed. A polymerization catalyst used for preparing the polyethylene is not particularly limited, and examples thereof include a Ziegler-Natta catalyst, a Phillips catalyst, and a Metallocene catalyst. From the viewpoint of achieving both mechanical strength and high permeability, the viscosity average molecular weight of the polyethylene is preferably 100,000 or more and 12,000,000 or less, and more preferably 200,000 or more and 3,000,000 or less. Examples of the polypropylene include a homopolymer, a random copolymer, and a block copolymer. One kind thereof or a mixture of two or more kinds thereof can be used. Further, the polymerization catalyst is not particularly limited, and examples thereof include a Ziegler-Natta catalyst, and a Metallocene catalyst. Furthermore, the stereoregularity of the polypropylene is also not particularly limited, and isotactic, syndiotactic, and atactic polymers can be used. In terms of inexpensiveness, it is desirable to use isotactic polypropylene. Further, within a range not impairing the effects of the present invention, the polyolefin-based resin may further contain an appropriate amount of polyolefin other than polyethylene or polypropylene, and additives such as an antioxidant and a nucleating agent.

The thickness of the separator (i) or (ii) is generally 0.5 to 40 µm, preferably 1 to 30 µm, and more preferably 1 to 10 µm, from the viewpoint in that the resistance of the separator in the battery is reduced, and the viewpoint in that coating on the separator can be performed with good workability.

### (Layer (iii))

The layer (iii) of aggregate of non-conductive fine particles can be obtained by curing a mixture which contains non-conductive fine particles and a binding resin that may be added as necessary. Such a mixture is typically a slurry, and such a slurry is applied onto the film (i) or another member such as the woven fabric or nonwoven fabric (ii) and then cured, thereby obtaining the layer (iii).

### (Layer (iii): Non-Conductive Fine Particles)

It is desirable that non-conductive fine particles constituting the layer (iii) stably exist under the environment for use in the lithium ion secondary battery and be also electrochemically stable. For example, various non-conductive inorganic and organic fine particles can be used, and organic fine particles are preferably used.

Examples of the inorganic fine particles include particles of an oxide such as iron oxide, silicon oxide, aluminum oxide, magnesium oxide, and titanium oxide; particles of a nitride such as aluminum nitride and boron nitride; particles of a covalent crystal such as silicon and diamond; particles of an insoluble ionic crystal such as barium sulfate, calcium fluoride, and barium fluoride; particles obtained by subjecting the above-described various particles to treatment such as element substitution, surface treatment, and formation of solid solution; and a combination of two or more kinds thereof. Among these, oxide particles are preferable from the viewpoint of stability in the electrolytic solution and electric potential stability.

As the organic fine particles, particles including various high molecular materials such as polystyrene, polyethylene, polyimide, a melamine-based resin, and a phenol-based resin may be used. The high molecular materials constituting the particles can also be used as a mixture, a modified body, a derivative, a random copolymer, an alternate copolymer, a graft copolymer, a block copolymer, or a cross-linked body. Inside the particle, regions of two or more kinds of different high molecular materials may exist. Further, it is also possible to use particles having an electric insulation property that are obtained by a surface treatment of fine powders of conductive metals and conductive compounds or oxides such as carbon black, graphite, SnO₂, ITO and metallic powders, in which the surface treatment is performed using any of the above-exemplified non-conductive materials.

As the non-conductive fine particles constituting the layer (iii), two or more kinds of various inorganic fine particles and organic fine particles, which are described above, may be used in combination.

The average particle diameter (D50 average particle diameter of volume average) of the non-conductive fine particles constituting the layer (iii) is preferably 5 nm or more and 10 µm or less and more preferably 10 nm or more and 5 µm or less, from the viewpoints in that the dispersing state can be easily controlled and a film having a predetermined uniform thickness can be easily obtained. It is particularly preferable to adjust the average particle diameter of the non-conductive fine particles within a range of 50 nm or more and 2 µm or less for realizing easy dispersion, easy coating operation, and excellent controllability of voids.

Specifically, from the viewpoint of suppressing the aggregation of particles and obtaining suitable fluidity of a slurry, the BET specific surface area of the non-conductive fine particles is preferably 0.9 to 200 m²/g and more preferably 1.5 to 150 m²/g.

The shape of the non-conductive fine particles constituting the layer (iii) is not particularly limited, and may be a spherical shape, a needle shape, a rod shape, a spindle shape, a plate shape, a scale shape, or the like. A spherical shape, a needle shape, and a spindle shape are preferable. Further, porous particles can also be used.

The containing ratio of the non-conductive fine particles in the layer (iii) is preferably 5 to 99% by weight and more preferably 50 to 98% by weight, from the viewpoint in that a layer exhibiting high thermal stability and strength can be obtained.

### (Layer (iii): Binder)

In the present invention, the layer (iii) contains the above-mentioned non-conductive fine particles as an essential component but, as necessary, it is preferable to further include a binder. By containing a binder, the strength of the layer (iii) is improved and problems such as cracks can be prevented.

As the binder, although not particularly limited, various resin components or flexible polymers can be used.

Examples of the resin components which can be used include polyethylene, polytetrafluoroethylene (PTFE), polyvinylidene fluoride (PVDF), tetrafluoroethylene-hexafluoropropylene copolymers (FEP), polyacrylic acid derivatives,polyacrylonitrile derivatives, and the like. These may be used alone or in combination of two or more kinds.

Examples of the flexible polymers include an acrylic flexible polymer, which is a homopolymer of acrylic acid or a methacrylic acid derivative or a copolymer of the same and a monomer copolymerizable therewith, such as polybutyl acrylate, polybutyl methacrylate, polyhydroxyethyl methacrylate, polyacrylamide, polyacrylonitrile, a butyl acrylate-styrene copolymer, a butyl acrylate-acrylonitrile copolymer, or a butyl acrylate-acrylonitrile-glycidyl methacrylate copolymer;
an isobutylene-based flexible polymer such as polyisobutylene, isobutylene-isoprene rubber, or an isobutylene-styrene copolymer;
a diene-based flexible polymer such as polybutadiene, polyisoprene, a butadiene-styrene random copolymer, an isoprene-styrene random copolymer, an acrylonitrile-butadiene copolymer, an acrylonitrile-butadiene-styrene copolymer, a butadiene-styrene-block copolymer, a styrene-butadiene-styrene-block copolymer, an isoprene-styrene-block copolymer, or a styrene-isoprene-styrene-block copolymer;
a silicon-containing flexible polymer such as dimethyl polysiloxane, diphenyl polysiloxane, or dihydroxy polysiloxane;
an olefin-based flexible polymer such as liquid polyethylene, polypropylene, poly-1-butene, an ethylene-α-olefin copolymer, a propylene-α-olefin copolymer, an ethylene-propylene-diene copolymer (EPDM), or an ethylene-propylene-styrene copolymer;
a vinyl-based flexible polymer such as polyvinyl alcohol, polyvinyl acetate, polyvinyl stearate, or a vinyl acetate-styrene copolymer;
an epoxy-based flexible polymer such as polyethylene oxide, polypropylene oxide, or epichlorohydrin rubber;
a fluorine-containing flexible polymer such as vinylidene fluoride-based rubber or ethylene tetrafluoride-propylene rubber;
other flexible polymers such as natural rubber, polypeptide, protein, a polyester-based thermoplastic elastomer, a vinyl chloride-based thermoplastic elastomer, or a polyamide-based thermoplastic elastomer; and the like. Among these, an acrylic flexible polymer is preferable and an acrylic flexible polymer containing an acrylonitrile polymer unit is more preferable. When the binder is the above-described copolymer, the dissolution to the electrolytic solution is suppressed and occurrence of the deformation of the layer (iii) can be suppressed. Further, dissolution is not likely to occur even at a high temperature while maintaining the swelling property of the electrolytic solution, and excellent high-temperature characteristics may be exhibited. Therefore, by combining such a binder and the above-described non-conductive fine particles, the stability of the layer (iii) can be further improved.

The glass transition temperature of the binder constituting the layer (iii) is preferably 15°C or lower and more preferably 0°C or lower, from the viewpoint in that the layer (iii) can be provided with flexibility at room temperature, and it is possible to suppress cracks, missing of the layer (iii) and the like at the time of wind-up of a roll or at the time of roll-up. The glass transition temperature of the binder can be adjusted by changing a using ratio of a monomer constituting a polymer.

The weight average molecular weight of the binder constituting the layer (iii) is preferably 5,000 or more and more preferably 10,000 or more, but 10,000,000 or less, from the viewpoint in that the dispersibility of the non-conductive fine particles and the strength of the layer (iii) can be improved.

The containing ratio of the binder in the layer (iii) is preferably 0.1 to 10 parts by weight and more preferably 1 to 5 parts by weight with respect to 100 parts by weight of the non-conductive fine particles, from the viewpoint in that the movement of lithium ions is inhibited and thus an increase in resistance is suppressed while maintaining a binding property between the non-conductive fine particles, a binding property to an electrode, and flexibility.

### (Layer (iii): Arbitrary Component)

As necessary, the layer (iii) can contain an arbitrary component in addition to the non-conductive fine particles and the binder. Examples of the arbitrary component may include a dispersing agent, an electrolytic solution additive having a function such as suppression of electrolytic solution decomposition. These are not particularly limited as long as they do not influence battery reaction.

Examples of the dispersing agent include an anionic compound, a cationic compound, a nonionic compound, and a high molecular compound. The dispersing agent may be selected according to non-conductive fine particles to be used. However, in the case of using organic fine particles as the non-conductive fine particles, it is preferable to use a water-soluble polymer such as carboxymethyl cellulose.

Examples of other arbitrary components include nano-fine particles such as fumed silica and fumed alumina; and surfactants such as an alkyl-based surfactant, a silicon-based surfactant, a fluorine-based surfactant, and a metal-based surfactant. By mixing the nano-fine particles, itispossible to control the thixotropy of the slurry for forming the layer (iii), whereby the leveling property of the resulting layer (iii) can be improved. When the surfactant is mixed, repelling occurring during coating can be prevented, and smoothness of the electrode can be improved. The containing ratio of the surfactant in the layer (iii) is preferably in a range which does not influence the battery characteristics, and preferably 10% by weight or less.

In order to control strength, hardness, and thermal shrinkage, the layer (iii) may further contain particles other than non-conductive fine particles and fiber compounds. Further, upon forming the layer (iii) on a surface of another member, in order to improve adhesiveness and reduce the surface tension with an electrolytic solution so as to improve impregnating property of a solution, the surface of another member on which the layer (iii) is provided may be preliminarily coated with a low molecular compound or a high molecular compound, or may be preliminarily be subjected to treatment with electromagnetic beams such as ultraviolet rays, or subjected to plasma treatment with corona discharge or a plasma gas.

### (Layer (iii): Forming Method)

The layer (iii) can be formed by applying a slurry for forming the layer (iii) onto another member and then drying it, in which the slurry contains a dispersion medium and the above-described various components constituting the layer (iii) that are dispersed in the dispersion medium. For example, by applying a slurry for forming the layer (iii), which contains organic fine particles, onto the separator (i) or (ii) and drying it, a separator on which organic fine particle porous films are laminated (the above-described (iv)) can be obtained.

Further, by applying a slurry for forming the layer (iii), which contains organic fine particles, to the negative electrode active material surface of the lithium ion secondary battery negative electrode and/or the positive electrode active material surface of the lithium ion secondary battery positive electrode and drying it, it is possible to obtain a lithium ion secondary battery negative electrode and/or a lithium ion secondary battery positive electrode on which organic fine particle porous films (polymer layers) are laminated.

As a solvent to be used for a slurry for forming the layer (iii), any of water and an organic solvent can be used.

Examples of the organic solvent include aromatic hydrocarbons such as benzene, toluene, xylene, and ethylbenzene and chlorinated aliphatic hydrocarbons such as methylene chloride, chloroform, and carbon tetrachloride. In addition to these, pyridine, acetone, dioxane, dimethylformamide, methyl ethyl ketone, diisopropyl ketone, cyclohexanone, tetrahydrofuran, n-butyl phthalate, methyl phthalate, ethyl phthalate, tetrahydrofurfuryl alcohol, ethyl acetate, butyl acetate, 1-nitropropane, carbon disulfide, tributyl phosphate, cyclohexane, cyclopentane, xylene, methylcyclohexane, ethylcyclohexane, N-methylpyrrolidone, and the like are exemplified. These solvents may be used alone or a mixed solvent thereof may be used.

These solvents may be used alone, or two or more kinds thereof may be mixed and used as a mixed solvent. Among these, a solvent, which is excellent in dispersibility of the non-conductive fine particles and has a low boiling point and a high volatility, is preferable from the viewpoint in that the solvent can be removed in a short time and at a low temperature. Specifically, it is preferable to use acetone, cyclohexanone, cyclopentane, tetrahydrofuran, cyclohexane, xylene, water, N-methylpyrrolidone, or a mixed solvent thereof. Further, from the viewpoint of a low volatility and excellent workability at the time of applying a slurry, it is particularly preferable to use cyclohexanone, xylene, N-methylpyrrolidone, or a mixed solvent thereof.

The solid content concentration of the slurry for forming the layer (iii) is not particularly limited as long as coating and dipping can be performed and its viscosity exhibits fluidity, and in general, the solid content concentration is about 20 to 50% by weight.

The producing method of the slurry for forming the layer (iii) is not particularly limited, and it is possible to obtain a slurry in which non-conductive fine particles are highly dispersed regardless of mixing methods or mixing sequences. A mixing apparatus is not particularly limited as long as it can uniformly mix a component, and it is possible to use a ball mill, a sandmill, a pigment dispersingmachine, a grinding mill, an ultrasonic dispersing machine, a homogenizer, a planetary mixer, or the like. It is particularly preferable to use a high-dispersion apparatus capable of giving high dispersion share, such as a bead mill, a roll mill, or FILMICS.

The method of applying the slurry for forming the layer (iii) onto another member is not particularly limited. For example, methods such as a doctor blade method, a dip method, a reverse roll method, a direct roll method, a gravure method, an extrusion method, and a brush method are exemplified. Among these, a dip method and a gravure method are preferable in terms of obtaining a uniform layer . Examples of a drying method include drying by warm air, hot air, or low wet air, vacuum drying, a drying method with irradiation of (far-) infrared rays, electron beams, or the like. The drying temperature varies depending on the type of a solvent to be used. In order to thoroughly remove the solvent, it is preferable to perform drying at a high temperature of 120°C or higher with an air-blower drying machine in a case where a low-volatile solvent such as N-methyl pyrrolidone is used as the solvent, for example. In contrast, in a case where a high-volatile solvent is used, it is possible to perform drying at a low temperature of 100°C or lower.

### (Property of Layer (iii))

The layer (iii) formed by the above-described forming method can exhibit a property in which non-conductive fine particles are bound via a binder, and have a structure in which voids are formed between the non-conductive fine particles. The electrolytic solution can infiltrate into the voids, and thus favorable battery reaction can be obtained.

The film thickness of the layer (iii) is not particularly limited and appropriately determined depending on the kind of lithium ion secondary battery for which the layer (iii) is used. However, too thin layer may cause hardly to form a uniform film while too thick layer may cause to reduce the capacity per volume (weight) in the battery. Therefore, the thickness is preferably 0.1 to 50 µm, more preferably 0.2 to 10 µm, and particularly preferably 0.5 to 10 µm.

### (Electrolytic solution)

The electrolytic solution used in the present invention is not particularly limited, and, for example, it is possible to use an electrolytic solution obtained by dissolving a lithium salt as a supporting electrolyte in a non-aqueous solvent. Examples of the lithium salt include lithium salts such as LiPF₆, LiAsF₆, LiBF₄, LiSbF₆, LiAlCl₄, LiClCO₄, CF₃SO3Li, C₄F₉SO₃Li, CF₃COOLi, (CF₃CO)₂NLi, (CF₃SO₂)₂NLi, and (C₂F₅SO₂)NLi. In particular, it is preferable to use LiPF₆, LiClO₄, and CF₃SO₃Li which are easily dissolved in the solvent and exhibit a high degree of dissociation. There can be used alone or in a mixture of two or more kinds . The amount of the supporting electrolyte is generally 1% by weight or more and preferably 5% by weight or more, or generally 30% by weight or less and preferably 20% by weight or less with respect to the electrolytic solution. Even in a case where the amount of the supporting electrolyte is too small or too large, the conductivity of ions is lowered and thus charging characteristics and discharging characteristics of the battery are lowered.

The solvent used for the electrolytic solution is not particularly limited as long as it can dissolve the supporting electrolyte, and in general, it is possible to use alkyl carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxy ethane and tetrahydrofuran; and sulfur-containing compounds such as sulfolane and dimethyl sulfoxide. In particular, dimethyl carbonate, ethylene carbonate, propylene carbonate, diethyl carbonate, and methyl ethyl carbonate are preferable since high ion conductivity is easily obtained and the usage temperature range is wide. These can be used alone or in a mixture of two or more kinds. Moreover, it is possible to add an additive to the electrolytic solution for use. As the additive, a carbonate-based compound such as vinylene carbonate (VC) is preferable.

Examples of an electrolytic solution other than those described above may include gel polymer electrolytes obtained by impregnating an electrolytic solution in a polymer electrolyte such as polyethylene oxide and polyacrylonitrile, and inorganic solid electrolytes such as LiI and Li₃N.

### (Lithium Ion Secondary Battery)

The configuration of the lithium ion secondary battery of the present invention is not particularly limited as long as the lithium ion secondary battery includes the above-described lithium ion secondary battery negative electrode, lithium ion secondary battery positive electrode, electrolytic solution and separator. General configurations of the lithium ion secondary battery can be employed appropriately. For example, the battery can be configured in such a manner that the lithium ion secondary battery positive electrode and lithium ion secondary battery negative electrode are superimposed via the separator, followed by being winded or bended depending on the battery shape to fit in a battery case, the electrolytic solution is injected into the battery case, and then the battery case is sealed.

Particularly preferably, the battery can have a laminated type structure in which the lithium ion secondary battery negative electrode, the lithium ion secondary battery positive electrode, and the separator are stacked as non-curving and flat layers. For example, the battery may preferably have a multilayer laminated type structure of (current collector)-(positive electrode active material layer)-(separator)-(negative electrode active material layer)-(current collector)-(negative electrode active material layer)-(separator)-(positive electrode active material layer)-(current collector) .... The multilayer laminate structure may be obtained by forming a negative electrode active material layer or a positive electrode active material layer on both sides of a flat plate current collector, forming a laminate body having a layer structure of (negative electrode active material layer)-(current collector)-(negative electrode active material layer) (a conductive adhesive layer may be optionally interposed between the current collector and the negative electrode active material layer) and a laminate body having a layer structure of (positive electrode active material layer)-(current collector)-(positive electrode active material layer) (a conductive adhesive layer may be optionally interposed between the current collector and the positive electrode active material layer), and combining them.

The lithium ion secondary battery of the present invention can be provided, as necessary, with an arbitrary constituent element such as expanded metal, an overcurrent protection device such as a fuse and a PTC device, or a lead plate. By providing these, it is also possible to prevent an increase in the internal pressure of the battery and to prevent overcharge/overdischarge.

The outer shape of the battery may be any of a coin type, a button type, a sheet type, a cylinder type, a horn shape, a laminated type, or the like, but a laminated type is preferable in terms of excellent output density and safety.

Use of the lithium ion secondary battery of the present invention is not particularly limited, and the battery may be used for the same application as the conventional secondary batteries. In particular, the lithium ion secondary battery can be used as an electric power supply for a compact electronic devices such as a mobile phone and a laptop personal computer and a large apparatus such as an electric automobile, taking advantage of the properties that are a high capacity, an ability to maintain a high capacity even when charging and discharging are performed in a rapid manner and when charging and discharging are performed in a low temperature environment, and also high safety.

### {Examples}

Hereinafter, the present invention will be described referring to Examples, but the present invention is not limited thereto. Incidentally, unless otherwise noted, "part(s) " and "%" in Examples are based on weight. The unit Kg/cm² is converted to N/m² as follows: 1 Kg/cm² = 98.067 x 10³ N/m². In Examples and Comparative Examples, peel strength after electrolytic solution immersion, a high temperature storage property, high temperature cycle characteristics, a low temperature output property, and swelling of the cell were determined as follows. Further, these determination results are presented in Table 1 and Table 2.

### (Peel Strength After Electrolytic Solution Immersion)

Each of lithium ion secondary battery negative electrodes and lithium ion secondary battery positive electrodes produced in Examples and Comparative Examples was cut out in a rectangle shape having a length of 100 mm and a width of 10 mm to prepare a sample piece. The sample pieces were immersed in the electrolytic solution (1.0 mol/L of LiPF_{6/}EC + DEC (EC/DEC = 1/2 volume ratio)) at 60°C for 72 hours and then dried. The cellophane tape (those defined by JIS Z1522) was attached to the electrode composition layer surface by facing each of the negative electrode active material layer surface of the dried lithium ion secondary battery negative electrode and the positive electrode active material layer surface of the lithium ion secondary battery positive electrode down, then one end of the current collector was stretched in a vertical direction at the stretching speed of 50 mm/min, and the stress when the tape was peeled was measured (note that the cellophane tape is fixed to the test board) . The measurement was performed three times, and the average value thereof was obtained to determine the peel strength. The larger the peel strength is, the larger the binding forces to the current collector of the negative electrode active material layer and the positive electrode active material layer are. In other words, the larger peel strength indicates that the adhesion strength is larger.

### (High Temperature Storage Property)

The laminate cell-type lithium ion secondary batteries were prepared using the lithium ion secondary battery negative electrodes produced in Examples and Comparative Examples and were left to stand still at 25°C for 24 hours, and then a charging-discharging operation was performed at 25°C and at a charging voltage of 4.2 V, a discharging voltage of 3.0 V, and a charging-discharging rate of 0.1 C to measure an initial capacity C₀. Further, the batteries were charged to 4.2 V and stored at 60°C for seven days. Thereafter, the charging-discharging operation was performed at 25°C and at a charging voltage of 4.2 V, a discharging voltage of 3.0 V, and a charging-discharging rate of 0.1 C to measure a capacity C₁ after the high-temperature storage. The high temperature storage property was evaluated based on a capacity change rate represented by ΔC = C₁/C₀ × 100 (%). A higher value of the capacity change rate indicates that the high temperature storage property is excellent. In other words, a higher value thereof indicates that tight bonding between active materials is achieved and thus a decrease in capacity is suppressed.

### (High Temperature Cycle Characteristics)

The lithium ion secondary batteries produced in Examples and Comparative Examples were left to stand still at 25°C for 24 hours, and then the charging-discharging operation was performed at 25°C and at a charging voltage of 4.2 V, a discharging voltage of 3.0 V, and a charging-discharging rate of 0.1 C to measure an initial capacity C₀. Further, charging and discharging were repeated under the environment of 60°C (charging voltage of 4.2 V, discharging voltage of 3.0 V, and charging-discharging rate of 0.1 C) to measure a capacity C₂ after 100 cycles. The high temperature cycle characteristics were evaluated based on a capacity change rate represented by ΔC = C₂/C₀ × 100 (%). A higher value of the capacity change rate indicates that the high temperature cycle characteristics are excellent. In other words, a higher value thereof indicates that tight bonding between active materials is achieved and thus a decrease in capacity is suppressed.

### (Low Temperature Output Property)

The lithium ion secondary batteries produced in Examples and Comparative Examples were left to stand still at 25°C for 24 hours, and then the charging operation at 4.2 V and a charging rate of 0.1 C was performed at 25°C. Thereafter, the discharging operation was performed at a discharging rate of 1 C under the environment of -25°C to measure the voltage V 10 seconds after starting the discharging operation. The low temperature output property was evaluated based on the voltage change represented by ΔV = 4.2 V - V, and a lower value of the voltage change indicates that low temperature output property is excellent. In other words, a lower value thereof indicates that tight bonding between active materials is achieved and thus polarization at the time of discharging is suppressed.

### (Swelling of Cell)

The lithium ion secondary batteries prepared in Examples and Comparative Examples were left to stand still at 25°C for 24 hours. Thereafter, the charging and discharging operation was performed at 60°C and at a charging voltage of 4.2 V, a discharging voltage of 3.0 V, and a charging-discharging rate of 1 C to measure a cell thickness (d₂) after 200 cycles of charging and discharging. Then, a change rate (Δd₂ = (d₂-d₀)/d₀ × 100 (%)) with respect to a cell thickness (do) immediately after preparing the lithium ion secondary battery was calculated. A lower value of the change rate indicates that swelling of the cell caused by repetition of charging and discharging is suppressed.

Further, in the following Examples and Comparative Examples, the swelling degree and tensile strength of the binder composition for a negative electrode and the binder composition for a positive electrode were measured as follows .

### (Swelling Degree)

A film with a size of 1 × 1 cm² which consists of the binder composition for a negative electrode and the binder composition for a positive electrode was prepared to measure a weight M₀ of the film. Thereafter, the film was immersed in 1.0 mol/L of LiPF_{6/}EC + DEC (EC/DEC = 1/2: volume ratio) at 60°C for 72 hours to measure a weight M₁ of the immersed film. The swelling degree was calculated from M₁/M₀.

### (Tensile Strength)

The repeating tensile strength (low extension modulus of 15%) of the binder composition for a negative electrode and the binder composition for a positive electrode produced in Examples and Comparative Examples was a value obtained in such a manner that a binder film swollen by the same manner as in the above-described measurement of the swelling degree was stretched at a speed of 50 mm/min and then a strength corresponding to 15% extension was measured 1,000 times, according to JIS-K7312.

### {Example 1}

### (Production of Water-Soluble Polymer)

Into a 5 MPa-pressure resisting container equipped with a stirrer, 35 parts of methacrylic acid (MAA), 65 parts of ethyl acrylate, 1.0 part of sodium dodecylbenzene sulfonate as an emulsifying agent, 150 parts of ion exchange water, and 0.5 part of potassium persulfate as a polymerization initiator were placed, and sufficiently stirred, followed by heating at 60°C to initiate polymerization. When the polymerization conversion ratio reached to 96%, the mixture was cooled and the reaction was terminated. Therefore, an aqueous dispersion containing a water-soluble polymer was obtained.

To the aqueous dispersion containing a water-soluble polymer, 10% ammonia water was added and pH was adjusted to 8 to obtain a desired aqueous solution of a water-soluble polymer.

### (Production of Binder Composition for Negative Electrode)

Into a 5 MPa-pressure resisting container equipped with a stirrer, 62.5 parts of styrene (ST), 34 parts of 1, 3-butadiene (BD), 3.5 parts of itaconic acid (IA), 4 parts of sodium dodecylbenzene sulfonate as an emulsifying agent, 150 parts of ion exchange water, and 0.5 part of potassium persulfate as a polymerization initiator were placed, and sufficiently stirred, followed by heating at 50°C to initiate polymerization. When the polymerization conversion ratio reached to 96%, the mixture was cooled and the reaction was terminated. Then, after 5% sodium hydroxide solution was added thereto and pH was adjusted to 8, an unreacted monomer was removed by heating and distillation under reduced pressure and then the resultant mixture was cooled to 30°C or lower. Therefore, a desired aqueous dispersion containing the particulate polymer A was obtained.

The swelling degree of the binder composition for a negative electrode consisting of 1 part (based on solid content) of aqueous dispersion containing the particulate polymer A and 1 part of 5% aqueous solution of the water-soluble polymer was 1.4 times, the tensile strength thereof (low extension modulus of 15%) was 12.8 Kg/cm², and the tetrahydrofuran-insoluble content was 88.5%. In the binder composition for a negative electrode, a mixing ratio of the particulate polymer A to the water-soluble polymer was 0.4 : 0.05 in terms of the solid content equivalent ratio.

### (Production of Slurry Composition for Negative Electrode)

To a planetary mixer equipped with a disperser, 70 parts of artificial graphite (average particle diameter: 24.5 µm) having a specific surface area of 4 m²/g as a negative electrode active material, 30 parts of SiC, and 1 part of 5% aqueous solution of the water-soluble polymer were added. After the solid content concentration was adjusted with ion exchange water to 55%, the mixture was mixed at 25°C for 60 minutes. Then, after the solid content concentration was adjusted with ion exchange water to 52%, the mixture was further mixed at 25°C for 15 minutes to obtain a mixed solution.

To the mixed solution, 1 part (based on solid content) of aqueous dispersion containing the particulate polymer A and ion exchange water were placed such that the final solid content concentration was adjusted to 42%, and the mixture was further mixed for 10 minutes. The resultant mixture was subjected to a defoaming treatment under reduced pressure to obtain a slurry composition for a negative electrode having good fluidity.

### (Production of Negative Electrode)

The obtained slurry composition for a negative electrode was applied with a comma coater on a 20 µm-thick copper foil such that the dried film thickness became about 150 µm. The slurry was dried for 2 minutes (at a rate of 0.5 m/min, 60°C) and then subjected to heat treatment (120°C) for 2 minutes to obtain a negative electrode raw material. This negative electrode raw material was rolled with a roll press to obtain a secondary battery negative electrode having a negative electrode active material layer thickness of 80 µm.

### (Production of Binder Composition for Positive Electrode)

Into a 5 MPa-pressure resisting container equipped with a stirrer, 65 parts of 2-ethylhexyl acrylate (2-EHA), 35 parts of methacrylic acid (MAA), 4 parts of sodium dodecylbenzene sulfonate as an emulsifying agent, 150 parts of ion exchange water, and 0.5 part of potassium persulfate as a polymerization initiator were placed, and sufficiently stirred, followed by heating at 50°C to initiate polymerization. When the polymerization conversion ratio reached to 96%, the mixture was cooled and the reaction was terminated. Then, after 5% sodium hydroxide solution was added thereto and pH was adjusted to 8, an unreacted monomer was removed by heating and distillation under reduced pressure and then the resultant mixture was cooled to 30°C or lower. Therefore, an aqueous dispersion containing the particulate polymer B (binder composition for a positive electrode) was obtained.

The swelling degree of the binder composition for a positive electrode was 2.4 times and the tensile strength thereof (low extension modulus of 15%) was 1.55 Kg/cm².

### (Production of Slurry Composition for Positive Electrode)

100 parts of LiNiO₂ as a positive electrode active material, 1 part in terms of solid content of 1% aqueous solution of carboxymethyl cellulose (CMC, "BSH-12" produced by DAI-ICHI KOGYO SEIYAKU CO., LTD.) as a dispersing agent, 5 parts in terms of solid content of 40% aqueous dispersion of the binder composition for a positive electrode, and ion exchange water were mixed using a planetary mixer so as to adjust the total solid content concentration to 40%. Therefore, a slurry composition for a positive electrode was prepared.

### (Production of Positive Electrode)

The obtained slurry composition for a positive electrode was applied with a comma coater on a 20 µm-thick aluminum foil such that the dried film thickness became about 200 µm. The slurry was dried for 2 minutes (at a rate of 0.5 m/min, 60°C) and then subjected to heat treatment (120°C) for 2 minutes to obtain an electrode raw material. This positive electrode raw material was rolled with a roll press to obtain a secondary battery positive electrode having a positive electrode active material layer thickness of 80 µm.

### (Separator)

Organic fine particles (polystyrene beads, volume average particle diameter: 1.0 µm), the above-described binder composition for a positive electrode and carboxymethyl cellulose (CMC, "BSH-12" produced by DAI-ICHI KOGYO SEIYAKU CO., LTD.) were mixed in 100 : 3 : 1 (solid content ratio), and ion exchange water was further mixed in the mixture so as to adjust the solid concentration to 40%. The mixture was then dispersed using a bead mill to prepare a slurry for an organic fine particle porous film.

Subsequently, a slurry 1 for an organic fine particle porous film was applied onto a monolayer polypropylene film for a separator (65 mm in width, 500 mm in length, 25 µm in thickness, produced by the dry method, porosity: 55%) with a wire bar such that the thickness of a porous film layer after drying was 5 µm, and then drying was performed at 60°C for 30 seconds to form an organic fine particle porous film, thereby obtaining a separator with an organic fine particle porous film.

### (Production of Lithium Ion Battery)

The separator was disposed on the surface of the positive electrode active material layer side of the positive electrode . Further, the negative electrode was disposed on the separator such that the surface of the negative electrode active material layer side faced the separator, and the separator was disposed such that the organic fine particle porous film faced the negative electrode active material layer. Furthermore, a laminate film was disposed to come in contact with the current collector surface of the negative electrode, thereby producing a laminate-cell type lithium ion secondary battery. As the electrolytic solution, 1.0 mol/L of LiPF_{6/}EC + DEC (EC/DEC = 1/2 (volume ratio)) was used.

### {Example 2}

A lithium ion secondary battery was produced in the same manner as in Example 1 except that the composition of the monomer at the time of producing the particulate polymer A was 57 parts of styrene, 39.5 parts of 1,3-butadiene, and 3.5 parts of itaconic acid. Incidentally, the swelling degree of the binder composition for a negative electrode consisting of 1 part (based on solid content) of aqueous dispersion containing the particulate polymer A of Example 2 and 1 part of 5% aqueous solution of the water-soluble polymer was 1.7 times, the tensile strength thereof (low extension modulus of 15%) was 9.5 Kg/cm², and the tetrahydrofuran-insoluble content was 90.8%.

### {Example 3}

A lithium ion secondary battery was produced in the same manner as in Example 1 except that the composition of the monomer at the time of producing the particulate polymer A was 68 parts of styrene, 28.5 parts of 1,3-butadiene, and 3.5 parts of itaconic acid. Incidentally, the swelling degree of the binder composition for a negative electrode consisting of 1 part (based on solid content) of aqueous dispersion containing the particulate polymer A of Example 3 and 1 part of 5% aqueous solution of the water-soluble polymer was 1.67 times, the tensile strength thereof (low extension modulus of 15%) was 8.8 Kg/cm², and the tetrahydrofuran-insoluble content was 83.2%.

### {Example 4}

A lithium ion secondary battery was produced in the same manner as in Example 1 except that the composition of the monomer at the time of producing the particulate polymer B was 72 parts of 2-ethylhexyl acrylate and 28 parts of methacrylic acid. Incidentally, the swelling degree of the binder composition for a positive electrode of Example 4 was 3.1 times and the tensile strength thereof (low extension modulus of 15%) was 0.94 Kg/cm².

### {Example 5}

A lithium ion secondary battery was produced in the same manner as in Example 1 except that the composition of the monomer at the time of producing the particulate polymer B was 78 parts of 2-ethylhexyl acrylate and 22 parts of methacrylic acid. Incidentally, the swelling degree of the binder composition for a positive electrode of Example 5 was 4.1 times and the tensile strength thereof (low extension modulus of 15%) was 0.25 Kg/cm².

### {Example 6}

A lithium ion secondary battery was produced in the same manner as in Example 1 except that the water-soluble polymer contained in the binder composition for a negative electrode was not used. Incidentally, the swelling degree of the binder composition for a negative electrode of Example 6 was 1.4 times, the tensile strength thereof (low extension modulus of 15%) was 7.8 Kg/cm², and the tetrahydrofuran-insoluble content was 90.2%.

### {Example 7}

A lithium ion secondary battery was produced in the same manner as in Example 1 except that the composition of the negative electrode active material contained in the slurry composition for a negative electrode was 90 parts of artificial graphite and 10 parts of SiC.

### {Example 8}

A lithium ion secondary battery was produced in the same manner as in Example 1 except that the composition of the negative electrode active material contained in the slurry composition for a negative electrode was 95 parts of artificial graphite and 5 parts of SiC.

### {Example 9}

A lithium ion secondary battery was produced in the same manner as in Example 1 except that the composition of the negative electrode active material contained in the slurry composition for a negative electrode was 70 parts of artificial graphite and 30 parts of SiOC.

### {Example 10}

A lithium ion secondary battery was produced in the same manner as in Example 1 except that the composition of the negative electrode active material contained in the slurry composition for a negative electrode was 70 parts of artificial graphite and 30 parts of SiOₓ.

### {Example 11}

A lithium ion secondary battery was produced in the same manner as in Example 1 except that the composition of the negative electrode active material contained in the slurry composition for a negative electrode was 90 parts of artificial graphite and 10 parts of Si negative electrode material A. The Si negative electrode material A was obtained in such a manner that Si fine particles (volume average parlicle diameter: 20 nm) was mixed with artificial graphite using water and the mixture was spray-dried using a spray drier.

### {Example 12}

A lithium ion secondary battery was produced in the same manner as in Example 1 except that the composition of the negative electrode active material contained in the slurry composition for a negative electrode was 85 parts of artificial graphite and 15 parts of Si negative electrode material B. The Si negative electrode material B was obtained by calcining the Si negative electrode material A at 2,000°C.

### {Example 13}

A lithium ion secondary battery was produced in the same manner as in Example 1 except that the composition of the negative electrode active material contained in the slurry composition for a negative electrode was 80 parts of artificial graphite and 20 parts of Si negative electrode material C. The Si negative electrode material C was obtained by calcining the Si negative electrode material A at 2,500°C.

### {Comparative Example 1}

A lithium ion secondary battery was produced in the same manner as in Example 1 except that the composition of the monomer at the time of producing the particulate polymer A was 40 parts of styrene, 55.5 parts of 1,3-butadiene, and 4.5 parts of methacrylic acid, the composition of the monomer at the time of producing the particulate polymer B was 95 parts of butyl acrylate (BA) and 5 parts of methacrylic acid, the water-soluble polymer was not used, and the organic fine particle porous film was not formed on the monolayer polypropylene film for a separator. Incidentally, the swelling degree of the binder composition for a negative electrode of Comparative Example 1 was 2.4 times, the tensile strength thereof (low extension modulus of 15%) was 0.45 Kg/cm², and the tetrahydrofuran-insoluble content was 67.7%. Moreover, the swelling degree of the binder composition for a positive electrode of Comparative Example 1 was 7.8 times and the tensile strength thereof (low extension modulus of 15%) was 0.08 Kg/cm².

### {Comparative Example 2}

A lithium ion secondary battery was produced in the same manner as in Comparative Example 1 except that the composition of the monomer at the time of producing the particulate polymer A was 70.5 parts of styrene, 26 parts of 1,3-butadiene, and 3.5 parts of methacrylic acid and a negative electrode active material including only artificial graphite was used. Incidentally, the swelling degree of the binder composition for a negative electrode of Comparative Example 2 was 1.4 times, the tensile strength thereof (low extension modulus of 15%) was 7.8 Kg/cm², and the tetrahydrofuran-insoluble content was 68%.

### {Comparative Example 3}

A lithium ion secondary battery was produced in the same manner as in Example 1 except that a negative electrode active material including only artificial graphite was used.

### {Comparative Example 4}

A lithium ion secondary battery was produced in the same manner as in Comparative Example 1 except that the composition of the monomer at the time of producing the particulate polymer B was 70 parts of butyl acrylate, 10 parts of methacrylic acid, and 20 parts of acrylonitrile, a negative electrode active material including only artificial graphite was used, and the organic fine particle porous film was not formed on the monolayer polypropylene film for a separator. Incidentally, the swelling degree of the binder composition for a positive electrode of Comparative Example 4 was 7.5 times and the tensile strength thereof (low extension modulus of 15%) was 0.001 Kg/cm².

**{Table 1}**

| | | | | Example 1 | Example 2 |
|---|---|---|---|---|---|
| Negative electrode | Negative electrode active material | Type | | Graphite/SiC | Graphite/SiC |
| | | Loaded ratio | | 70/30 | 70/30 |
| | Negative electrode binder composition | Type of aromatic vinyl monomer | | ST | ST |
| | | Amount (part) | | 62.5 | 57 |
| | | Type of aliphatic conjugated diene monomer | | BD | BD |
| | | Amount (part) | | 34 | 39.5 |
| | | Type of ethylenically unsaturated carboxylic acid monomer | | IA | IA |
| | | Amount (part) | | 3.5 | 3.5 |
| | | Swelling degree (times) | | 1.4 | 1.7 |
| | | Tensile strength (low extension modulus of 15%)(kg/cm²) | | 12.8 | 9.5 |
| | | Tetrahydrofuran-insoluble content(%) | | 88.5 | 90.8 |
| | | Water-soluble polymer | Type of ethylenically unsaturated carboxylic acid monomer | MAA | MAA |
| | | | Amount (part) | 35 | 35 |
| | | | Type of monomer that is copolymerizable with ethylenically unsaturated carboxylic acid monomer | EA | EA |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 35 | 35 |
| | | Type of (meth)acrylic acid ester monomer | | 2-EHA | 2-EHA |
| | | Amount (part) | | 65 | 65 |
| | | Type and amount (part) of other components | | - | - |
| | | Swelling degree (times) | | 2.4 | 2.4 |
| | | Tensile strength (low extension modulus of 15%)(kg/ cm²) | | 1.55 | 1.55 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 12.9 | 11.2 |
| | | | Positive electrode | 19.2 | 19.2 |
| | | High temperature storage property (%) | | 91.8 | 90.7 |
| | | High temperature cycle characteristics (%) | | 89.8 | 89 |
| | | Low temperature output property (mV) | | 135 | 140 |
| | | Swelling of cell (%) | | 4.5 | 4.9 |

| | | | | Example 3 | Example 4 |
|---|---|---|---|---|---|
| Negative electrode | Negative electrode active material | Type | | Graphite/SiC | Graphite/SiC |
| | | Loaded ratio | | 70/30 | 70/30 |
| | Negative electrode binder composition | Type of aromatic vinyl monomer | | ST | ST |
| | | Amount (part) | | 68 | 62.5 |
| | | Type of aliphatic conjugated diene monomer | | BD | BD |
| | | Amount (part) | | 28.5 | 34 |
| | | Type of ethylenically unsaturated carboxylic acid monomer | | IA | IA |
| | | Amount (part) | | 3.5 | 3.5 |
| | | Swelling degree (times) | | 1.6 | 1.4 |
| | | Tensile strength (low extension modulus of 15%)(kg/cm²) | | 8.8 | 12.8 |
| | | Tetrahydrofuran-insoluble content(%) | | 83.2 | 88.5 |
| | | Water-soluble polymer | Type of ethylenically unsaturated carboxylic acid monomer | MAA | MAA |
| | | | Amount (part) | 35 | 35 |
| | | | Type of monomer that is copolymerizable with ethylenically unsaturated carboxylic acid monomer | EA | EA |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 35 | 28 |
| | | Type of (meth)acrylic acid ester monomer | | 2-EHA | 2-EHA |
| | | Amount (part) | | 65 | 72 |
| | | Type and amount (part) of other components | | - | - |
| | | Swelling degree (times) | | 2.4 | 3.1 |
| | | Tensile strength (low extension modulus of 15%)(kg/ cm²) | | 1.55 | 0.94 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 10.8 | 12.9 |
| | | | Positive electrode | 19.2 | 17.1 |
| | | High temperature storage property (%) | | 90.1 | 90.8 |
| | | High temperature cycle characteristics (%) | | 88.2 | 89.5 |
| | | Low temperature output property (mV) | | 144 | 145 |
| | | Swelling of cell (%) | | 5.3 | 4.8 |

| | | | | Example 5 | Example 6 |
|---|---|---|---|---|---|
| Negative electrode | Negative electrode active material | Type | | Graphite/SiC | Graphite/SiC |
| | | Loaded ratio | | 70/30 | 70/30 |
| | Negative electrode binder composition | Type of aromatic vinyl monomer | | ST | ST |
| | | Amount (part) | | 62.5 | 62.5 |
| | | Type of aliphatic conjugated diene monomer | | BD | BD |
| | | Amount (part) | | 34 | 34 |
| | | Type of ethylenically unsaturated carboxylic acid monomer | | IA | IA |
| | | Amount (part) | | 3.5 | 3.5 |
| | | Swelling degree (times) | | 1.4 | 1.4 |
| | | Tensile strength (low extension modulus of 15%)(kg/cm²) | | 12.8 | 7.8 |
| | | Tetrahydrofuran-insoluble content(%) | | 88.5 | 90.2 |
| | | Water-soluble polymer | Type of ethylenically unsaturated carboxylic acid monomer | MAA | - |
| | | | Amount (part) | 35 | - |
| | | | Type of monomer that is copolymerizable with ethylenically unsaturated carboxylic acid monomer | EA | - |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 22 | 35 |
| | | Type of (meth)acrylic acid ester monomer | | 2-EHA | 2-EHA |
| | | Amount (part) | | 78 | 65 |
| | | Type and amount (part) of other components | | - | - |
| | | Swelling degree (times) Tensile strength (low extension modulus of 15%)(kg/cm²) | | 4.1 | 2.4 |
| | | | | 0.25 | 1.55 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 12.9 | 7.8 |
| | | | Positive electrode | 15.5 | 19.2 |
| | | High temperature storage property (%) | | 89.7 | 89.5 |
| | | High temperature cycle characteristics (%) | | 88 | 86.2 |
| | | Low temperature output property (mV) | | 155 | 170 |
| | | Swelling of cell (%) | | 5.9 | 6.5 |

| | | | | Example 7 | Example 8 |
|---|---|---|---|---|---|
| Negative electrode | Negative electrode active material | Type | | Graphite/SiC | Graphite/SiC |
| | | Loaded ratio | | 90/10 | 95/5 |
| | Negative electrode binder composition | Type of aromatic vinyl monomer | | ST | ST |
| | | Amount (part) | | 62.5 | 62.5 |
| | | Type of aliphatic conjugated diene monomer | | BD | BD |
| | | Amount (part) | | 34 | 34 |
| | | Type of ethylenically unsaturated carboxylic acid monomer | | IA | IA |
| | | Amount (part) | | 3.5 | 3.5 |
| | | Swelling degree (times) | | 1.4 | 1.4 |
| | | Tensile strength (low extension modulus of 15%)(kg/ cm²) | | 12.8 | 12.8 |
| | | Tetrahydrofuran-insoluble content(%) | | 88.5 | 88.5 |
| | | Water-soluble polymer | Type of ethylenically unsaturated carboxylic acid monomer | MAA | MAA |
| | | | Amount (part) | 35 | 35 |
| | | | Type of monomer that is copolymerizable with ethylenically unsaturated carboxylic acid monomer | EA | EA |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 35 | 35 |
| | | Type of (meth)acrylic acid ester monomer | | 2-EHA | 2-EHA |
| | | Amount (part) | | 65 | 65 |
| | | Type and amount (part) of other components | | - | - |
| | | Swelling degree (times) | | 2.4 | 2.4 |
| | | Tensile strength (low extension modulus of 15%)(kg/cm²) | | 1.55 | 1.55 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 15.2 | 10.1 |
| | | | Positive electrode | 19.2 | 19.2 |
| | | High temperature storage property (%) | | 92.5 | 90.1 |
| | | High temperature cycle characteristics (%) | | 91.1 | 84.2 |
| | | Low temperature output property (mV) | | 140 | 165 |
| | | Swelling of cell (%) | | 2.5 | 7.9 |

**{Table 2}**

| | | | | Example 9 | Example 10 |
|---|---|---|---|---|---|
| Negative electrode | Negative electrode active material | Type | | Graphite/SiOC | Graphite/SiOx |
| | | Loaded ratio | | 70/30 | 70/30 |
| | Negative electrode binder composition | Type of aromatic vinyl monomer | | ST | ST |
| | | Amount (part) | | 62.5 | 62.5 |
| | | Type of aliphatic conjugated diene monomer | | BD | BD |
| | | Amount (part) | | 34 | 34 |
| | | Type of ethylenically unsaturated carboxylic acid monomer | | IA | IA |
| | | Amount (part) | | 3.5 | 3.5 |
| | | Swelling degree (times) | | 1.4 | 1.4 |
| | | Tensile strength (low extension modulus of 15%)(kg/cm²) | | 12.8 | 12.8 |
| | | Tetrahydrofuran-insoluble content(%) | | 88.5 | 88.5 |
| | | Water-soluble polymer | Type of ethylenically unsaturated carboxylic acid monomer | MAA | MAA |
| | | | Amount (part) | 35 | 35 |
| | | | Type of monomer that is copolymerizable with ethylenically unsaturated carboxylic acid monomer | EA | EA |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 35 | 35 |
| | | Type of (meth)acrylic acid ester monomer | | 2-EHA | 2-EHA |
| | | Amount (part) | | 65 | 65 |
| | | Type and amount (part) of other components | | - | - |
| | | Swelling degree (times) | | 2.4 | 2.4 |
| | | Tensile strength (low extension modulus of 15%)(kg/cm²) | | 1.55 | 1.55 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 11.1 | 10.3 |
| | | | Positive electrode | 19.2 | 19.2 |
| | | High temperature storage property (%) | | 90.5 | 90.1 |
| | | High temperature cycle characteristics (%) | | 86.8 | 87.7 |
| | | Low temperature output property (mV) | | 135 | 135 |
| | | Swelling of cell (%) | | 4.8 | 4.1 |

| | | | | Example 11 | Example 12 |
|---|---|---|---|---|---|
| Negative electrode | Negative electrode active material | Type | | Graphite/Si negative electrode material A | Graphite/Si negative electrode material B |
| | | Loaded ratio | | 90/10 | 85/15 |
| | Negative electrode binder composition | Type of aromatic vinyl monomer | | ST | ST |
| | | Amount (part) | | 62.5 | 62.5 |
| | | Type of aliphatic conjugated diene monomer | | BD | BD |
| | | Amount (part) | | 34 | 34 |
| | | Type of ethylenically unsaturated carboxylic acid monomer | | IA | IA |
| | | Amount (part) | | 3.5 | 3.5 |
| | | Swelling degree (times) | | 1.4 | 1.4 |
| | | Tensile strength (low extension modulus of 15%)(kg/ cm²) | | 12.8 | 12.8 |
| | | Tetrahydrofuran-insoluble content(%) | | 88.5 | 88.5 |
| | | Water-soluble polymer | Type of ethylenically unsaturated carboxylic acid monomer | MAA | MAA |
| | | | Amount (part) | 35 | 35 |
| | | | Type of monomer that is copolymerizable with ethylenically unsaturated carboxylic acid monomer | EA | EA |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 35 | 35 |
| | | Type of (meth)acrylic acid ester monomer | | 2-EHA | 2-EHA |
| | | Amount (part) | | 65 | 65 |
| | | Type and amount (part) of other components | | - | - |
| | | Swelling degree (times) | | 2.4 | 2.4 |
| | | Tensile strength (low extension modulus of 15%)(kg/cm²) | | 1.55 | 1.55 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 12.2 | 11.5 |
| | | | Positive electrode | 19.2 | 19.2 |
| | | High temperature storage property (%) | | 89.5 | 93.3 |
| | | High temperature cycle characteristics (%) | | 85.9 | 91.5 |
| | | Low temperature output property (mV) | | 140 | 145 |
| | | Swelling of cell (%) | | 3.8 | 2.2 |

| | | | | Example 13 | Comparative Example 1 |
|---|---|---|---|---|---|
| Negative electrode | Negative electrode active material | Type | | Graphite/Si negative electrode material C | Graphite/SiC |
| | | Loaded ratio | | 80/20 | 70/30 |
| | Negative electrode binder composition | Type of aromatic vinyl monomer | | ST | ST |
| | | Amount (part) | | 62.5 | 40 |
| | | Type of aliphatic conjugated diene monomer | | BD | BD |
| | | Amount (part) | | 34 | 55.5 |
| | | Type of ethylenically unsaturated carboxylic acid monomer | | IA | MAA |
| | | Amount (part) | | 3.5 | 4.5 |
| | | Swelling degree (times) | | 1.4 | 2.4 |
| | | Tensile strength (low extension modulus of 15%)(kg/ cm²) | | 12.8 | 0.45 |
| | | Tetrahydrofuran-insoluble content(%) | | 88.5 | 67.7 |
| | | Water-soluble polymer | Type of ethylenically unsaturated carboxylic acid monomer | MAA | - |
| | | | Amount (part) | 35 | - |
| | | | Type of monomer that is copolymerizable with ethylenically unsaturated carboxylic acid monomer | EA | - |
| Positive electrode | Positive electrode active material | Type | | LiNiO₂ | LiNiO₂ |
| | Positive electrode binder composition | Type of ethylenioally uncaturated oarboxylio acid monomer | | MAA | MAA |
| | | Amount (part) | | 35 | 5 |
| | | Ty pe of (meth)acrylic acid ester monomer | | 2-EHA | BA |
| | | Amount (part) | | 65 | 95 |
| | | Type and amount (part) of other components | | - | - |
| | | Swelling degree (times) | | 2.4 | 7.8 |
| | | Tensile strength (low extension modulus of 15%)(kg/cm²) | | 1.55 | 0.08 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 10.9 | 6.5 |
| | | | Positive electrode | 19.2 | 7.7 |
| | | High temperature storage property (%) | | 94.2 | 80.2 |
| | | High temperature cycle characteristics (%) | | 92.2 | 76.2 |
| | | Low temperature output property (mV) | | 150 | 220 |
| | | Swelling of cell (%) | | 2.1 | 12.6 |

| | | | | Comparative Example 2 | Comparative Example 3 |
|---|---|---|---|---|---|
| Negative electrode | Negative electrode active material | Type | | Graphite | Graphite |
| | | Loaded ratio | | 100/0 | 100/0 |
| | Negative electrode binder composition | Type of aromatic vinyl monomer | | ST | ST |
| | | Amount (part) | | 70.5 | 62.5 |
| | | Type of aliphatic conjugated diene monomer | | BD | BD |
| | | Amount (part) | | 26 | 34 |
| | | Type of ethylenically unsaturated carboxylic acid monomer | | MAA | IA |
| | | Amount (part) | | 3.5 | 3.5 |
| | | Swelling degree (times) | | 1.4 | 1.4 |
| | | Tensile strength (low extension modulus of 15%)(kg/cm²) | | 7.8 | 12.8 |
| | | Tetrahydrofuran-insoluble content(%) | | 68 | 88.5 |
| | | Water-soluble polymer | Type of ethylenically unsaturated carboxylic acid monomer | - | MAA |
| | | | Amount (part) | - | 35 |
| | | | Type of monomer that is copolymerizable with ethylenically unsaturated carboxylic acid monomer | - | EA |
| Positive electrode | Positive electrode active material | Type | | LiNiO₂ | LiNiO₂ |
| | Positive electrode binder composition | Type of ethylenically unsaturated carboxylic acid monomer | | MAA | MAA |
| | | Amount (part) | | 5 | 35 |
| | | Type of (meth)acrylic acid ester monomer | | BA | 2-EHA |
| | | Amount (part) | | 95 | 65 |
| | | Type and amount (part) of other components | | - | - |
| | | Swelling degree (times) | | 7.8 | 2.4 |
| | | Tensile strength (low extension modulus of 15%)(kg/ cm²) | | 0.08 | 1.55 |
| Presence/absence of polymer layer on positive electrode and negative electrode | | | | Absence | Absence |
| Presence/absence of organic fine particle porous film on separator | | | | Presence | Presence |
| Evaluation item | | Peel strength after electrolytic solution immersion (N/m) | Negative electrode | 10.8 | 12.2 |
| | | | Positive electrode | 7.7 | 19.2 |
| | | High temperature storage property (%) | | 81.8 | 90.8 |
| | | High temperature cycle characteristics (%) | | 77.9 | 85.8 |
| | | Low temperature output property (mV) | | 198 | 210 |
| | | Swelling of cell (%) | | 11.9 | 5.5 |

| | | | | Comparative Example 4 | |
|---|---|---|---|---|---|
| Negative electrode | Negative electrode active material | Type | | Graphite | |
| | | Loaded ratio | | 100/0 | |
| | Negative electrode binder composition | Type of aromatic vinyl monomer | | ST | |
| | | Amount (part) | | 40 | |
| | | Type of aliphatic conjugated diene monomer | | BD | |
| | | Amount (part) | | 55.5 | |
| | | Type of ethylenically unsaturated carboxylic acid monomer | | MAA | |
| | | Amount (part) | | 4.5 | |
| | | Swelling degree (times) | | 2.4 | |
| | | Tensile strength (low extension modulus of 15%)(kg/cm²) | | 0.45 | |
| | | Tetrahydrofuran-insoluble content(%) | | 67.7 | |
| | | Water-soluble polymer | Type of ethylenically unsaturated carboxylic acid monomer | - | |
| | | | Amount (port) | - | |
| | | | Type of monomer that is copolymerizable with ethylenically unsaturated carboxylic acid monomer | | |
| Positive electrode | Positive electrode active material | Type | | LiNiO₂ | |
| | Positive electrode binder composition | Type of ethylenioally uncaturated carboxylic acid monomer | | MAA | |
| | | Amount (part) | | 10 | |
| | | Type of (meth)acrylic acid ester monomer | | BA | |
| | | Amount (part) | | 70 | |
| | | Type and amount (part) of other components | | Acrylonitrile, 20 | |
| | | Swelling degree (times) | | 7.5 | |
| | | Tensile strength (low extension modulus of 15%)(kg/cm²) | | 0.1 | |
| Presence/absence of polymer layer on positive electrode and negative electrode | | | | Absence | |
| Presence/absence of organic fine particle porous film on separator | | | | Presence | |
| Evaluation item | | Peel strength after electrolytic solution immersion (N/m) | Negative electrode | 6.5 | |
| | | | Positive electrode | 10.2 | |
| | | High temperature storage property (%) | | 82.8 | |
| | | High temperature cycle characteristics (%) | | 78.5 | |
| | | Low temperature output property (mV) | | 205 | |
| | | Swelling of cell (%) | | 11.2 | |

As presented in Table 1 and Table 2, in the case of using the lithium ion secondary battery including a negative electrode, a positive electrode, an electrolytic solution, and a separator, in which the negative electrode includes a negative electrode active material layer formed from a slurry composition for a negative electrode which includes a binder composition for a negative electrode including a particulate polymer A containing an aliphatic conjugated diene monomer unit, and a negative electrode active material, a swelling degree of the binder composition for a negative electrode with respect to the electrolytic solution obtained by dissolving an electrolyte in a solvent having a solubility parameter of 8 to 13 (cal/cm³) ^{1/2} is 1 to 2 times, a repeating tensile strength of the binder composition for a negative electrode swollen by the electrolytic solution is 0.49 x 10⁵ N/m² to 19.61 x 10⁵ N/m² (0.5 to 20 Kg/cm²) at a low extension modulus of 15%, the positive electrode includes a positive electrode active material layer formed from a slurry composition for a positive electrode which includes a binder composition for a positive electrode including a particulate polymer B containing an ethylenically unsaturated carboxylic acid monomer unit, and a positive electrode active material, a swelling degree of the binder composition for a positive electrode with respect to the electrolytic solution obtained by dissolving an electrolyte in a solvent having a solubility parameter of 8 to 13 (cal/cm³)^{1/2} is 1 to 5 times, and a repeating tensile strength of the binder composition for a positive electrode swollen by the electrolytic solution is 1.96 x 10⁴ N/m² to 4.90 x 10⁵N/m² (0.2 to 5 Kg/cm²) at a low extension modulus of 15%, all of the peel strength after electrolytic solution immersion, the high temperature storage property, the high temperature cycle characteristics, and the low temperature output property were favorable and the swelling of the cell was suppressed.

## Claims

1. A lithium ion secondary battery comprising a positive electrode, a negative electrode, an electrolytic solution, and a separator,
wherein the negative electrode includes a negative electrode active material layer formed from a slurry composition for the negative electrode which includes a binder composition for the negative electrode including a particulate polymer A containing 20 to 50% by weight of an aliphatic conjugated diene monomer unit and 50 to 75% by weight of an aromatic vinyl monomer unit with respect to the total monomer units, and a negative electrode active material,
the swelling degree of the binder composition for the negative electrode is 1 to 2 times when a film of the binder composition for the negative electrode is immersed in a liquid which is a 1.0 mol/L LiPF₆ solution in a mixture of ethylene carbonate and diethyl carbonate at a volume ratio of 1/2 as a solvent at 60°C for 72 hours;
the repeating tensile strength of the binder composition for the negative electrode swollen by said liquid is 0.49 x 10⁵ N/m² to 19.61 x 10⁵ N/m² (0.5 to 20 Kg/cm²) at a low extension modulus of 15%, the positive electrode includes a positive electrode active material layer formed from a slurry composition for the positive electrode which includes a binder composition for the positive electrode including a particulate polymer B containing 20 to 50% by weight of an ethylenically unsaturated carboxylic acid monomer unit and 50 to 80% by weight of a (meth)acrylic acid ester monomer unit with respect to the total monomer units, and a positive electrode active material,
the swelling degree of the binder composition for the positive electrode is 1 to 5 times when a film of the binder composition for the positive electrode is immersed in a liquid which is a 1.0 mol/L LiPF₆ solution in a mixture of ethylene carbonate and diethyl carbonate at a volume ratio of 1/2 as a solvent at 60°C for 72 hours; and
the repeating tensile strength of the binder composition for the positive electrode swollen by said liquid is 1.96 x 10⁴ N/m² to 4.90 x 10⁵ N/m² (0.2 to 5 Kg/cm²)_at a low extension modulus of 15%, wherein the repeating tensile strength (low extension modulus of 15%) is obtained by stretching a swollen binder film at a speed of 50 mm/min and measuring a strength corresponding to 15% extension at 1,000 times of stretching according to JIS-K7312.

2. The lithium ion secondary battery according to claim 1, wherein the negative electrode active material includes a Si compound that occludes and releases lithium.

3. The lithium ion secondary battery according to claim 1 or 2,
wherein the particulate polymer A includes an ethylenically unsaturated carboxylic acid monomer unit, and
a containing ratio of the ethylenically unsaturated carboxylic acid monomer unit in the particulate polymer A is 0.5 to 10% by weight.

4. The lithium ion secondary battery according to any one of claims 1 to 3, wherein a tetrahydrofuran-insoluble content of the particulate polymer A is 75 to 95%.

5. The lithium ion secondary battery according to any one of claims 1 to 4,
wherein the binder composition for a negative electrode further includes a water-soluble polymer having an ethylenically unsaturated carboxylic acid monomer unit, and
a containing ratio of the ethylenically unsaturated carboxylic acid monomer unit in the water-soluble polymer is 20 to 60% by weight.

6. The lithium ion secondary battery according to any one of claims 1 to 5, the lithium ion secondary battery being a laminated type.

## Patentansprüche

1. Eine Lithiumionen-Sekundärbatterie umfassend eine positive Elektrode, eine negative Elektrode, eine Elektrolytlösung, und einen Separator,
wobei die negative Elektrode eine Schicht aus Negativ-Elektroden-aktivem Material umfasst, welche aus einer Aufschlämmungszusammensetzung für die negative Elektrode hergestellt wurde, die eine Bindemittelzusammensetzung für die negative Elektrode umfasst mit einem partikelförmigen Polymer A enthaltend 20 bis 50 Gewichts-% einer aliphatischen konjugierten Dien-Monomereinheit und 50 bis 75 Gewichts-% einer aromatischen Vinyl-Monomereinheit bezogen auf die Gesamtmenge an Monomereinheiten, und ein Negativ-Elektroden-aktives Material,
wobei der Schwellungsgrad der Bindemittelzusammensetzung für die negative Elektrode das 1- bis 2-fache beträgt, wenn ein Film aus der Bindemittelzusammensetzung für die negative Elektrode bei 60°C für 72 Stunden getaucht wird in eine Flüssigkeit, welche eine 1,0 mol/L LiPF₆-Lösung in einem Gemisch aus Ethylencarbonat und
Diethylcarbonat in einem Volumenverhältnis von 1/2 als Lösemittel ist;
wobei die wiederholte Zugfestigkeit der Bindemittelzusammensetzung für die negative Elektrode, die durch diese Flüssigkeit geschwollen ist, 0,49 x 10⁵ N/m² bis 19,61 x 10⁵ N/m² (0,5 bis 20 Kg/cm²) beträgt bei einem niedrigen Verlängerungsmodulus von 15%,
wobei die positive Elektrode eine Schicht aus Positiv-Elektroden-aktivem Material umfasst, welche aus einer Aufschlämmungszusammensetzung für die positive Elektrode hergestellt wurde, die eine Bindemittelzusammensetzung für die positive Elektrode umfasst mit einem partikelförmigen Polymer B enthaltend 20 bis 50 Gewichts-% einer ethylenisch ungesättigte Carbonsäure-Monomereinheit und 50 bis 80 Gewichts-% einer (Meth)acrylsäureester-Monomereinheit bezogen auf die Gesamtmenge an Monomereinheiten, und ein Positiv-Elektroden-aktives Material,
wobei der Schwellungsgrad der Bindemittelzusammensetzung für die positive Elektrode das 1- bis 5-fache beträgt, wenn ein Film aus der Bindemittelzusammensetzung für die positive Elektrode bei 60°C für 72 Stunden getaucht wird in eine Flüssigkeit, welche eine 1,0 mol/L LiPF₆-Lösung in einem Gemisch aus Ethylencarbonat und Diethylcarbonat in einem Volumenverhältnis von 1/2 als Lösemittel ist; und
wobei die wiederholte Zugfestigkeit der Bindemittelzusammensetzung für die positive Elektrode, die durch diese Flüssigkeit geschwollen ist, 1,96 x 10⁴ N/m² bis 4,90 x 10⁵ N/m² (0,2 bis 5 Kg/cm²) beträgt bei einem niedrigen Verlängerungsmodulus von 15%, wobei die wiederholte Zugfestigkeit (niedrigen Verlängerungsmodulus von 15%) ermittelt wird durch Dehnen eines geschwollenen Bindemittelfilms mit einer Geschwindigkeit von 50 mm/min und Messen einer Kraft, welche einer 15%igen Verlängerung entspricht, mit 1000mal Dehnen gemäß JIS-K7312.

2. Die Lithiumionen-Sekundärbatterie gemäß Anspruch 1, wobei das Negativ-Elektroden-aktive Material eine Si-Verbindung umfasst, welche Lithium einschließt und freisetzt.

3. Die Lithiumionen-Sekundärbatterie gemäß Anspruch 1 oder 2,
wobei das partikelförmige Polymer A eine ethylenisch ungesättigte Carbonsäure-Monomereinheit umfasst, und wobei der Gehalt der ethylenisch ungesättigten Carbonsäure-Monomereinheit im partikelförmigen Polymer A 0,5 bis 10 Gewichts-% beträgt.

4. Die Lithiumionen-Sekundärbatterie gemäß irgendeinem der Ansprüche 1 bis 3, wobei ein Tetrahydrofuranunlöslicher Anteil am partikelförmigen Polymer A 75 bis 95% beträgt.

5. Die Lithiumionen-Sekundärbatterie gemäß irgendeinem der Ansprüche 1 bis 4,
wobei die Bindemittelzusammensetzung für eine negative Elektrode des Weiteren umfasst ein wasserlösliches Polymer mit einer ethylenisch ungesättigten Carbonsäure-Monomereinheit, und
wobei der Gehalt der ethylenisch ungesättigten Carbonsäure-Monomereinheit im wasserlöslichen Polymer 20 bis 60 Gewichts-% beträgt.

6. Die Lithiumionen-Sekundärbatterie gemäß irgendeinem der Ansprüche 1 bis 5, wobei die Lithiumionen-Sekundärbatterie vom laminierten Typ ist.

## Revendications

1. Batterie secondaire à ions de lithium comprenant une électrode positive, une électrode négative, une solution électrolytique et un séparateur,
dans laquelle l'électrode négative comprend une couche de matériau actif d'électrode négative formée à partir d'une composition en suspension destinée à l'électrode négative qui comprend une composition de liant destinée à l'électrode négative comprenant un polymère particulaire A contenant 20 à 50% en poids d'une unité de monomère de diène conjugué aliphatique et 50 à 75% en poids d'une unité de monomère de vinyle aromatique par rapport aux unités de monomère totales, et un matériau actif d'électrode négative,
le degré de gonflement de la composition de liant destinée à l'électrode négative est de 1 ou 2 fois lorsqu'un film de la composition de liant destinée à l'électrode négative est immergé dans un liquide qui est une solution de LiPF₆ à 1 mol/litre dans un mélange de carbonate d'éthylène et de carbonate de diéthyle à un rapport de volume de 1/2 sous forme de solvant à 60°C pendant 72 heures ;
la résistance à la traction répétée de la composition de liant destinée à l'électrode négative gonflée par ledit liquide est de 0,49 x 10⁵ N/m² à 19,61 x 10⁵ N/m² (0,5 à 20 kg/cm²) à un module d'extension réduit de 15%, l'électrode positive comprend une couche de matériau actif d'électrode positive formée à partir d'une composition en suspension destinée à l'électrode positive qui comprend une composition de liant destinée à l'électrode positive comprenant un polymère particulaire B contenant 20 à 50% en poids d'une unité de monomère d'acide carboxylique éthylénique insaturé et 50 à 80% en poids d'une unité de monomère d'ester d'acide (méth)acrylique par rapport aux unités de monomère totales, et un matériau actif d'électrode positive,
le degré de gonflement de la composition de liant destinée à l'électrode positive est de 1 à 5 fois lorsqu'un film de la composition de liant destinée à l'électrode positive est immergé dans un liquide qui est une solution de LiPF₆ à 1 mol/litre dans un mélange de carbonate d'éthylène et de carbonate de diéthyle à un rapport de volume de ½ sous forme de solvant à 60°C pendant 72 heures ; et
la résistance à la traction répétée de la composition de liant destinée à l'électrode positive gonflée par ledit liquide est de 1,96 x 10⁴ N/m² à 4,90 x 10₅ N/m² (0,2 à 5 kg/cm²) à un module d'extension réduit de 15%, dans laquelle la résistance à la traction répétée (module d'extension réduit de 15%) est obtenue en étirant un film de liant gonflé à une vitesse de 50 mm/minute et en mesurant une résistance correspondant à 15% d'extension à 1000 fois l'étirage selon JIS-K7312.

2. Batterie secondaire à ions de lithium selon la revendication 1, dans laquelle le matériau actif d'électrode négative comprend un composé de Si qui bloque et libère le lithium.

3. Batterie secondaire à ions de lithium selon la revendication 1 ou 2,
dans laquelle le polymère particulaire A comprend une unité de monomère d'acide carboxylique éthylénique insaturé, et
un rapport de contenance de l'unité de monomère d'acide carboxylique éthylénique insaturé dans le polymère particulaire A est de 0,5 à 10% en poids.

4. Batterie secondaire à ions de lithium selon l'une quelconque des revendications 1 à 3, dans laquelle une teneur en polymère particulaire A insoluble dans le tétrahydrofurane est de 75 à 95%.

5. Batterie secondaire à ions de lithium selon l'une quelconque des revendications 1 à 4,
dans laquelle la composition de liant destinée à une électrode négative comprend en outre un polymère soluble dans l'eau ayant une unité de monomère d'acide carboxylique éthylénique insaturé, et
un rapport de contenance de l'unité de monomère d'acide carboxylique éthylénique insaturé dans le polymère soluble dans l'eau est de 20 à 60% en poids.

6. Batterie secondaire à ions de lithium selon l'une quelconque des revendications 1 à 5, la batterie secondaire à ions de lithium étant de type stratifié.
